# EUROPEAN PATENT SPECIFICATION

(11) **EP 3 989 594 B1**
(45) Date of publication and mention of the grant of the patent: **14.02.2024**
(21) Application number: 20826043.0
(22) Date of filing: 22.06.2020
(51) Int. Cl.: H04Q 9/00, F25B 1/00, G06Q 10/06, F24F 11/46, F24F 11/62, F24F 11/64, F24F 11/74, F24F 11/84, F24F 11/86, F24F 11/871, F24F 110/10, F24F 110/12, F24F 110/20, F24F 110/22, F24F 110/30, F24F 110/50, F24F 120/10, F24F 120/14, F24F 120/20, F24F 140/60, G06F 13/00

(54) **INFORMATION PROCESSING METHOD, INFORMATION PROCESSING DEVICE**
INFORMATIONSVERARBEITUNGSVERFAHREN, INFORMATIONSVERARBEITUNGSVORRICHTUNG
PROCÉDÉ DE TRAITEMENT D'INFORMATIONS, DISPOSITIF DE TRAITEMENT D'INFORMATIONS

(30) Priority: 21.06.2019 JP 2019115764; 30.09.2019 JP 2019180995
(43) Date of publication of application: 27.04.2022
(73) Proprietor: DAIKIN INDUSTRIES, LTD., Osaka-Shi, Osaka 530-0001 (JP)
(72) Inventor: NISHIMURA, Tadafumi, Osaka-shi, Osaka 530-8323 (JP); MURAYAMA, Hiroyuki, Osaka-shi, Osaka 530-8323 (JP); HANADA, Takuya, Osaka-shi, Osaka 530-8323 (JP); UEDA, Hiroki, Osaka-shi, Osaka 530-8323 (JP); SATOU, Daisuke, Osaka-shi, Osaka 530-8323 (JP)
(74) Representative: Goddar, Heinz J.
(86) International application number: PCT/JP2020/024376
(87) International publication number: WO 2020/256153

(56) References cited:
- WO-A1-2011/114827
- JP-A- H06 207 734
- JP-A- 2018 055 172
- US-A1- 2013 085 614
- US-A1- 2016 313 019

## Description

### TECHNICAL FIELD

The present disclosure relates to information processing methods, information processing apparatus.

### BACKGROUND ART

Techniques to perform air conditioning in view of both energy conservation and comfort have been known (see, for example, Patent Document 1).
Patent document 2 discloses an information processing method, wherein an information processing apparatus, based on a data set including a combination of information indicating a situation, information on comfort of a user, and information on power consumption when an air conditioner has been operated, executes a process of determining an operation setting according to a situation when the air conditioner is operated, the comfort when the air conditioner is operated, and a condition related to the power consumption when the air conditioner is operated.

### PRIOR ART DOCUMENT

### PATENT DOCUMENT

Patent Document 1: Japanese Laid-Open Patent Publication No. 2005-158020
Patent Document 2 : US 2013/085614

### SUMMARY OF THE INVENTION

### PROBLEMS TO BE SOLVED BY THE INVENTION

The conventional techniques, however, have a problem in that it may be impossible to appropriately balance energy conservation and comfort. The present disclosure has an object of providing a technique that makes it possible to appropriately balance energy conservation and comfort.

### MEANS FOR SOLVING THE PROBLEMS

The invention is set out in the appended set of claims. [

### BRIEF DESCRIPTION OF THE DRAWINGS

FIG. 1 is a diagram illustrating an example of the system configuration of an air conditioning system according to a claimed first embodiment.
FIG. 2 is a diagram illustrating an example of the hardware configuration of an information processing apparatus according to the embodiment.
FIG. 3 is a diagram illustrating an example of the functional block diagram of the air conditioning system according to the first embodiment.
FIG. 4 is a flowchart illustrating an example of the process of the air conditioning system during learning according to the first embodiment.
FIG. 5 is a diagram illustrating an example of a learning data set according to the first embodiment.
FIG. 6 is a flowchart illustrating an example of the process of the air conditioning system during inference according to the first embodiment.
FIG. 7 is a diagram illustrating an example of the system configuration of an information processing system according to an unclaimed second embodiment.
FIG. 8 is a diagram illustrating an example of the functional block diagram of the information processing apparatus according to the second embodiment.
FIG. 9 is a flowchart illustrating an example of the process of the information processing apparatus during learning according to the second embodiment.
FIG. 10 is a diagram illustrating an example of the history of operating conditions stored in an operating conditions DB according to the embodiment.
FIG. 11 is a flowchart illustrating an example of the process of the information processing apparatus during inference according to the second embodiment.
FIG. 12 is a diagram illustrating an example of a notification screen of a recommended operation setting according to the second embodiment.
FIG. 13 is a diagram illustrating an example of the functional blocks of the information processing apparatus according to an unclaimed third embodiment.
FIG. 14 is a flowchart illustrating an example of the process of the information processing apparatus during learning according to the third embodiment.
FIG. 15 is a diagram illustrating an example of the history of user operations with respect to recommended operation settings stored in a user operation DB according to the embodiment.
FIG. 16 is a flowchart illustrating an example of the process of the information processing apparatus during inference according to the third embodiment.

### EMBODIMENTS OF THE INVENTION

Embodiments are described below with reference to the drawings. In this specification and drawings, constituent elements having substantially the same functional configuration are denoted by the same reference numeral and a duplicate description thereof is omitted.

### [First Embodiment]

### <System Configuration of Air Conditioning System>

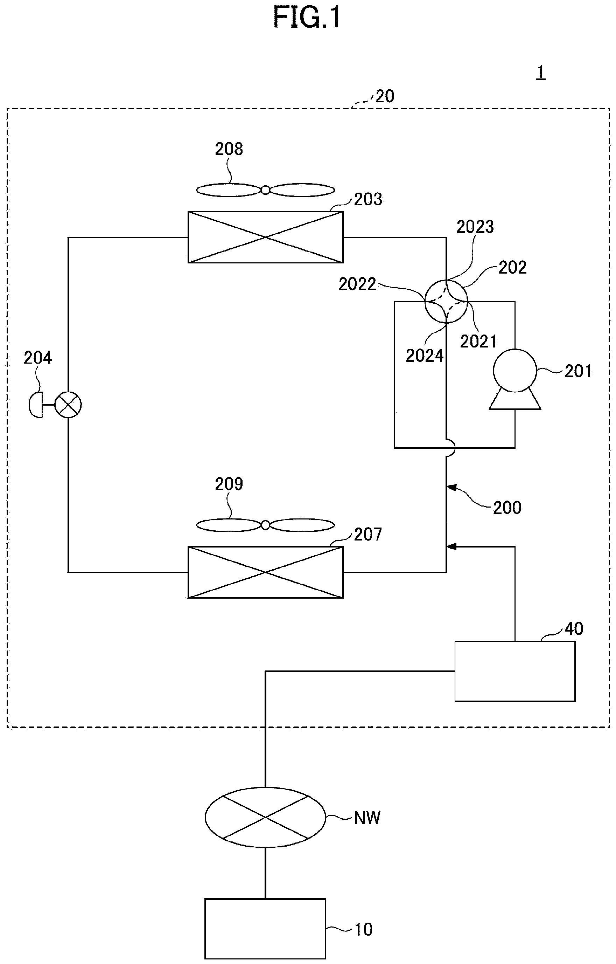

First, the system configuration of an air conditioning system 1 is described. FIG. 1 is a diagram illustrating an example of the system configuration of the air conditioning system 1 according to a first embodiment. As illustrated in FIG. 1, the air conditioning system 1 includes an information processing apparatus 10 and an air conditioner 20. The number of information processing apparatuses 10 and the number of air conditioners 20 are not limited to the example of FIG. 1. The information processing apparatus 10 is an example of "information processing apparatus."

The information processing apparatus 10 and the air conditioner 20 may be connected to be able to perform communications via a network NW, whose examples include a LAN, a signal line, a wireless LAN (Local Area Network), cellular phone networks of LTE (Long Term Evolution), 5G, etc., and the Internet.

The air conditioner 20 may be installed in, for example, houses, offices, public facilities, etc. The information processing apparatus 10 may be, for example, an edge server installed in a building where multiple air conditioners 20 are installed. Furthermore, the information processing apparatus 10 may also be, for example, a cloud server. Furthermore, the information processing apparatus 10 may also be accommodated in the housing of each unit included in the air conditioner 20 (for example, the housing of an indoor unit).

The information processing apparatus 10 performs machine learning based on a data set including a combination of information indicating an environment when the air conditioner 20 has been operated, information indicating the operation setting (operating conditions, operating situation) of the air conditioner 20 when the air conditioner 20 has been operated, and information on power consumption when the air conditioner 20 has been operated. In this machine learning, the information processing apparatus 10 creates, from information indicating an environment when the air conditioner 20 is operated, a trained model for inferring (estimating, determining) the operation setting of the air conditioner 20 with which user comfort satisfies a predetermined condition and information on power consumption satisfies a predetermined condition.

Furthermore, the information processing apparatus 10 determines, from information indicating an environment when the air conditioner 20 is operated, the operation setting of the air conditioner 20 with which user comfort satisfies a predetermined condition and information on power consumption satisfies a predetermined condition, and instructs the air conditioner 20 to operate with the determined operation setting.

A controller 40 of the air conditioner 20 operates the air conditioner 20 with an operation setting according to the instruction received from the information processing apparatus 10.

The air conditioner 20 includes various devices constituting a refrigerant circuit 200, various sensors, and the controller 40. The devices constituting the refrigerant circuit 200 are controlled by the controller 40. The refrigerant circuit 200 is, for example, a closed circuit filled with a refrigerant such as chlorofluorocarbon. For example, the refrigerant circuit 200 may be configured such that the refrigerant circulates to perform a vapor-compression refrigeration cycle.

In the refrigerant circuit 200, a compressor (compressor) 201, a four-way switching valve (four-way valve, switching valve) 202, an outdoor heat exchanger 203, an expansion valve (pressure reducing valve) 204, and an indoor heat exchanger 207 are connected. The compressor 201 is connected to a first port 2021 of the four-way switching valve 202 on the discharge side and is connected to a second port 2022 of the four-way switching valve 202 on the suction side. Furthermore, in the refrigerant circuit 200, the outdoor heat exchanger 203, the expansion valve 204, and the indoor heat exchanger 207 are arranged such that the refrigerant that has passed a third port 2023 of the four-way switching valve 202 passes the outdoor heat exchanger 203, the expansion valve 204, and the indoor heat exchanger 207 in order to travel toward a fourth port 2024 of the four-way switching valve 202.

The compressor 201 may be, for example, a hermetic, variable-displacement type. The compressor 201 compresses and discharges the refrigerant that has been taken in. For example, the capacity of the compressor 201 may be changed by changing the rotational speed of the motor (whose graphical representation is omitted) of the compressor 201 (the rotational speed of the compressor 201) by changing the frequency of an alternate current supplied to the motor. The rotational speed may be, for example, the number of revolutions per unit time or the like.

In the outdoor heat exchanger 203, heat is exchanged between outdoor air taken in by an outdoor fan 208 and the refrigerant. In the indoor heat exchanger 207 provided in an indoor unit, heat is exchanged between indoor air taken in by an indoor fan 209 and the refrigerant. The indoor fan 209 may be, for example, a cylindrical fan (cross-flow fan) that takes in air from an intake port and discharges air from a discharge port by rotating an impeller tilting forward in a rotation direction. By the rotation of the indoor fan 209, indoor air is taken in into the indoor unit and air with adjusted temperature, etc., is discharged into a room.

The expansion valve 204 may be, for example, an electronic expansion valve whose disc (whose graphical representation is omitted) is driven by a pulse motor (whose graphical representation is omitted) to adjust the degree of opening (hole size).

The four-way switching valve 202 is a valve that can switch a first state where the first port 2021 communicates with the third port 2023 and the second port 2022 communicates with the fourth port 2024 (the state indicated by a solid line in FIG. 1) and a second state where the first port 2021 communicates with the fourth port 2024 and the second port 2022 communicates with the third port 2023 (the state indicated by a dashed line in FIG. 1). The controller 40 switches cooling operation to cool a room in which the indoor unit is installed and heating operation to heat the room by switching the first state and the second state by controlling the four-way switching valve 202.

The compressor 201, the four-way switching valve 202, the outdoor heat exchanger 203, and the outdoor fan 208 may be accommodated in the housing of an outdoor unit (whose graphical representation is omitted). Furthermore, the controller 40, the expansion valve 204, the indoor heat exchanger 207, and the indoor fan 209 may be accommodated in the housing of the indoor unit (whose graphical representation is omitted). The expansion valve 204 may also be accommodated in the housing of the outdoor unit.

During cooling operation, the four-way switching valve 202 is set to the first state. When the compressor 201 is operated in this state, a refrigeration cycle is performed with the outdoor heat exchanger 203 serving as a condenser (radiator) and the indoor heat exchanger 207 serving as an evaporator. In this case, the refrigerant discharged from the compressor 201 flows into the outdoor heat exchanger 203 to dissipate heat to outdoor air. The refrigerant having dissipated heat expands (is decompressed) during passage of the expansion valve 204 to flow into the indoor heat exchanger 207. In the indoor heat exchanger 207, the refrigerant absorbs heat from indoor air to evaporate, and the cooled indoor air is supplied into the room. The evaporated refrigerant is taken in into the compressor 201 to be compressed.

During heating operation, the four-way switching valve 202 is set to the second state. When the compressor 201 is operated in this state, a refrigeration cycle is performed with the indoor heat exchanger 207 serving as a condenser (radiator) and the outdoor heat exchanger 203 serving as an evaporator. In this case, the refrigerant discharged from the compressor 201 flows into the indoor heat exchanger 207 to dissipate heat to indoor air. As a result, the heated indoor air is supplied into the room. The refrigerant having dissipated heat expands (is decompressed) during passage of the expansion valve 204. The refrigerant expanded at the expansion valve 204 flows into the outdoor heat exchanger 203 to absorb heat from outdoor air and evaporate. The evaporated refrigerant is taken in into the compressor 201 to be compressed.

### <Hardware Configuration of Information Processing Apparatus 10 and Controller 40>

Next, the hardware configuration of the information processing apparatus 10 and the controller 40 of the air conditioning system 1 according to the embodiment is described. The information processing apparatus 10 and the controller 40 have the same configuration. Therefore, only the hardware configuration of the information processing apparatus 10 is described here.

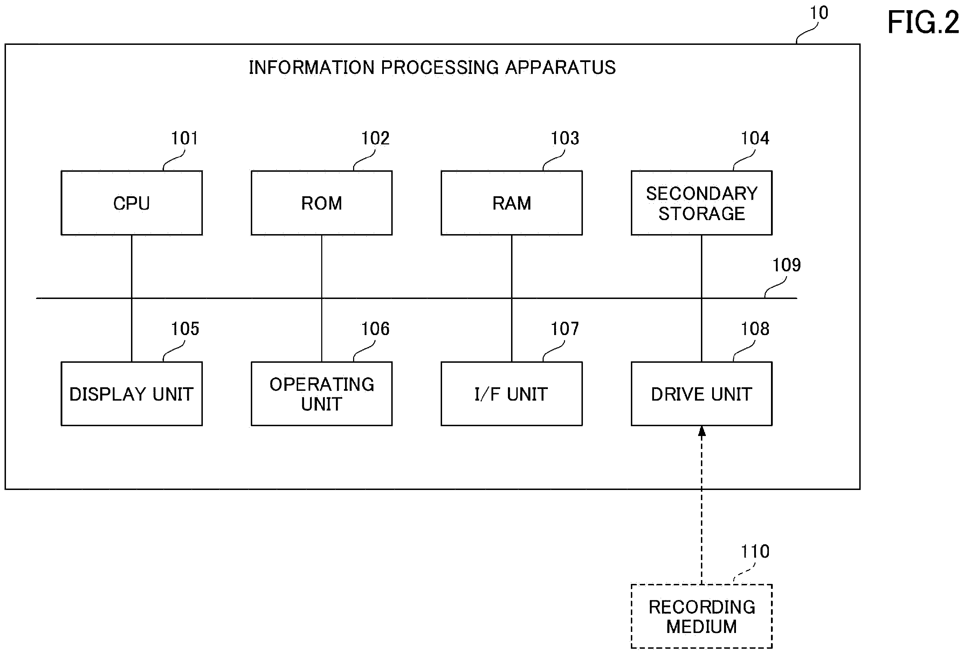

FIG. 2 is a diagram illustrating an example of the hardware configuration of the information processing apparatus 10 according to the embodiment. As illustrated in FIG. 2, the information processing apparatus 10 includes a CPU (Central Processing Unit) 101, a ROM (Read Only Memory) 102, and a RAM (random access memory) 103. The CPU 101, the ROM 102, and the RAM 103 constitute a so-called computer. Furthermore, the information processing apparatus 10 includes a secondary storage 104, a display unit 105, an operating unit 106, an I/F (Interface) unit 107, and a drive unit 108. The hardware items of the information processing apparatus 10 are interconnected via a bus 109.

The CPU 101 is a processor that executes various programs (for example, a machine learning program, etc.) installed in the secondary storage 104. The ROM 102 is a non-volatile memory. The ROM 102 operates as a primary storage to store various programs, data, etc., required by the CPU 101 to execute various programs installed in the secondary storage 104. Specifically, the ROM 102 stores boot programs, etc., such as the BIOS (Basic Input/Output System) and the EFI (Extensible Firmware Interface).

The RAM 103 is a volatile memory such as a DRAM (Dynamic Random Access Memory), an SRAM (Static Random Access Memory), or the like. The RAM 103 operates as a primary storage to provide a work area into which various programs installed in the secondary storage 104 are loaded when executed by the CPU 101.

The secondary storage 104 stores various programs and information that is used when various programs are executed.

The display unit 105 is a display device that displays various kinds of information. The operating unit 106 is an operating device for receiving various operations. The I/F unit 107 is a communication device that communicates with external apparatuses.

The drive unit 108 is a device for loading a recording medium 110. The recording medium 110 here includes media that optically, electrically, or magnetically record information, such as a CD-ROM, a flexible disk, and a magneto-optical disk. Furthermore, the recording medium 110 may also include semiconductor memories that electrically record information, such as a ROM and a flash memory.

For example, the recording medium 110 as distributed is loaded into the drive unit 108, and various programs recorded in the recording medium 110 are read by the drive unit 108 to be installed in the secondary storage 104. Alternatively, various programs may be downloaded from a network that is not depicted to be installed in the secondary storage 104.

### <Functional Configuration>

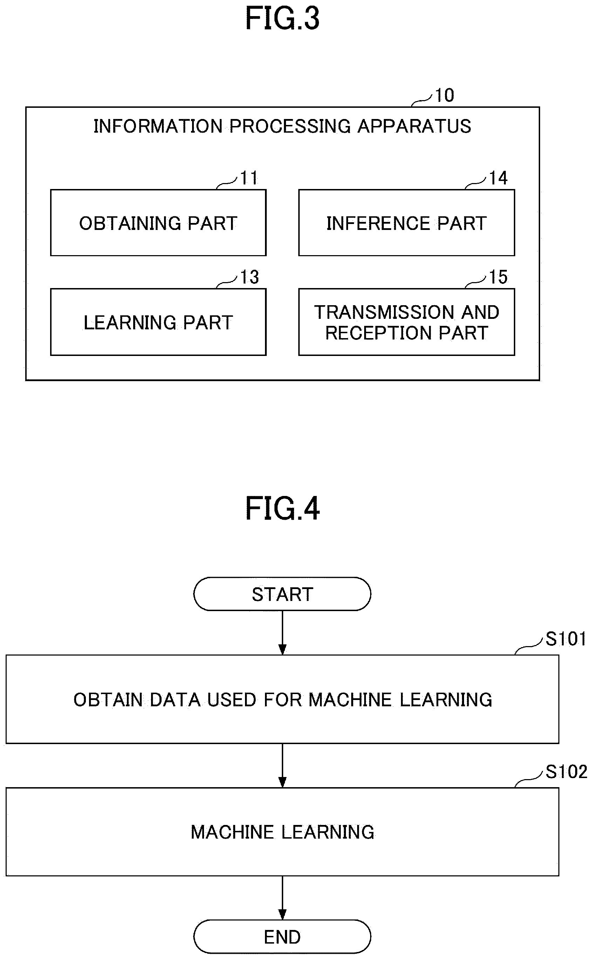

Next, the functional configuration of the air conditioning system 1 according to the first embodiment is described with reference to FIG. 3. FIG. 3 is a diagram illustrating an example of the functional blocks of the air conditioning system according to the first embodiment.

### <<Information Processing Apparatus 10»

The information processing apparatus 10 includes an obtaining part 11, a learning part 13, an inference part 14, and a transmission and reception part 15. These parts may be implemented by, for example, a process that one or more programs installed in the information processing apparatus 10 causes the CPU 101 of the information processing apparatus 10 to execute.

The obtaining part 11 obtains a learning data set 111 that is data used for machine learning. The obtaining part 11 may, for example, create the learning data set 111 based on information obtained from the air conditioner 20.

The learning part 13 performs machine learning based on the learning data set 111 obtained by the obtaining part 11. The learning part 13 performs machine learning based on the learning data set 111 that includes, for example, a combination of information indicating conditions, information on user comfort, and information on power consumption when the air conditioner 20 has been operated. The learning part 13 creates, for example, a trained model for determining an operation setting according to comfort when the air conditioner 20 is operated and a condition related to power consumption when the air conditioner 20 is operated according to conditions when the air conditioner 20 is operated.

The inference part 14 infers (determines) an optimum operation setting according to comfort when the air conditioner 20 is operated and a condition related to power consumption when the air conditioner 20 is operated according to conditions when the air conditioner 20 is operated, based on information obtained from the air conditioner 20 and the trained model created by the learning part 13.

The transmission and reception part 15 transmits data to and receives data from the air conditioner 20.

### <Processes>

### <<Process During Learning>>

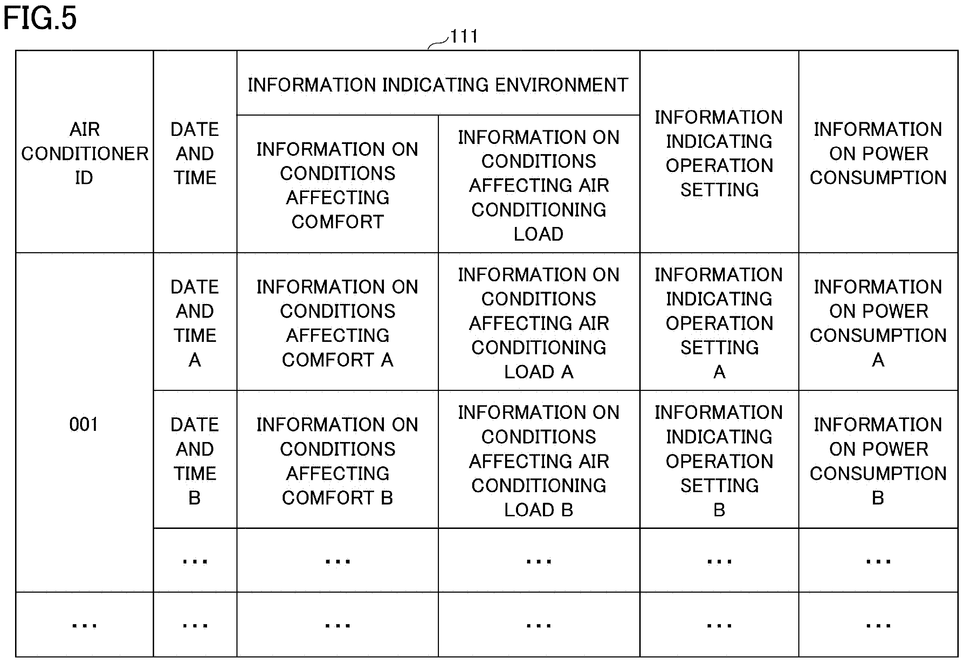

Next, an example of the process of the air conditioning system 1 according to the first embodiment during learning is described with reference to FIGS. 4 and 5. FIG. 4 is a flowchart illustrating an example of the process of the air conditioning system 1 during learning according to the first embodiment. FIG. 5 is a diagram illustrating an example of the learning data set 111 according to the first embodiment.

At step S101, the obtaining part 11 of the information processing apparatus 10 obtains data used for machine learning. Here, the obtaining part 11 of the information processing apparatus 10 obtains the learning data set 111 including a combination of information indicating an environment and conditions such as an operation setting and information on power consumption when the air conditioner 20 has been operated.

### (Learning Data Set 111)

According to the example of FIG. 5, the learning data set 111 includes information indicating an environment, information indicating an operation setting, and information on power consumption that are correlated with an air conditioner ID and a date and time. The information indicating an environment and the information indicating operating settings are examples of "information indicating a situation." Furthermore, at least one information item included in the information indicating an environment is an example of "information on comfort of a user." The air conditioner ID is the identification information of the air conditioner 20. The date and time is a date and time when each data is measured.

### ((Information Indicating Environment))

The information indicating an environment is information indicating an environment when the air conditioner 20 has been operated. The information indicating an environment may include information on conditions affecting comfort, the tolerance of a user for an operation setting according to conditions, and information on conditions affecting an air conditioning load. An example of the "tolerance" is described in a third embodiment.

### (((Information on Conditions Affecting Comfort)))

The information on conditions affecting comfort (an example of "information on comfort of a user") is information on conditions affecting the comfort of a user when the air conditioner 20 has been operated. The information on conditions affecting comfort may include at least one of, for example, indoor temperature, indoor humidity, an indoor air flow, indoor radiation temperature, the amount of user clothing, the amount of user activity, and user information. The indoor temperature is the temperature of the inside of a room (inside a room) in which the air conditioner 20 is installed, measured with the temperature sensor of the indoor unit of the air conditioner 20. The indoor humidity is humidity inside a room. The indoor air flow is an air flow (airflow velocity) inside a room. The indoor air flow may be, for example, information on the set airflow volume and the set airflow direction of the air conditioner 20. Alternatively, the indoor air flow may be measured with, for example, an airflow sensor provided in the air conditioner 20 or inside a room. The indoor radiation temperature is radiation temperature inside a room. The indoor radiation temperature may be measured with, for example, a radiation temperature sensor provided in the air conditioner 20 or inside a room.

The amount of user clothing is the amount of clothing of (the amount of clothes worn by) a user present inside a room. The amount of user clothing may be, for example, estimated by the obtaining part 11 of the information processing apparatus 10 with deep learning, which is machine learning using a deep neural network (Deep Neural Network: DNN), or the like, based on an image captured with the camera of the indoor unit of the air conditioner 20. For example, the clo value (clo value) may be used as the unit of the amount of user clothing.

The amount of user activity is the amount of activity (the amount of work, the metabolic rate) of a user present inside a room. The amount of user activity may be, for example, estimated by the obtaining part 11 of the information processing apparatus 10 with deep learning, which is machine learning using a deep neural network (Deep Neural Network: DNN), or the like, based on the time-series data of images captured by the camera of the indoor unit of the air conditioner 20. For example, the MET (Metabolic Equivalent) may be used as the unit of the amount of user activity.

The user information is information on a user present inside a room. The user information may include, for example, information on user attributes such as gender and age. Furthermore, the user information may also include information identifying each user. The user information may be, for example, estimated by AI (Artificial Intelligence) based on an image captured by the camera of the indoor unit of the air conditioner 20.

Furthermore, the information affecting comfort may include at least one of, for example, indoor lighting, an indoor scent, an indoor sound, and indoor air cleanliness.

The indoor lighting is information on lighting inside a room. The indoor lighting may include, for example, the brightness (luminous intensity, luminance, illuminance) and color of lighting. The indoor lighting may be, for example, estimated by AI based on an image captured by the camera of the indoor unit of the air conditioner 20. Alternatively, the indoor lighting may be, for example, measured with the lighting sensor of the indoor unit of the air conditioner 20.

By performing machine learning based on information on the indoor lighting, for example, it is believed that when the color of indoor lighting is a warm color (orange) such as an incandescent lamp color and is relatively bright in brightness, the set temperature of heating tolerated by a user can be inferred to be lower for a certain period of time because the user has a false sense of warmth. Furthermore, it is believed that when the color of indoor lighting is a cold color (pale) such as daylight white and is relatively dark in brightness, the set temperature of cooling tolerated by a user can be inferred to be higher for a certain period of time because the user has a false sense of coldness.

The indoor scent may be, for example, measured with the odor sensor of the indoor unit of the air conditioner 20. Alternatively, the indoor scent may be, for example, information on the type and amount (intensity) of a scent released from the scent releaser of the indoor unit of the air conditioner 20. By performing machine learning based on the indoor scent, for example, it is believed that when the indoor scent is a vanilla scent, the set temperature of heating tolerated by a user can be inferred to be lower for a certain period of time because the user has a false sense of warmth. Furthermore, it is believed that when the indoor scent is a scent of peppermint, grass reminiscent of the southern Japan Alps, or the like, the set temperature of cooling tolerated by a user can be inferred to be higher for a certain period of time because the user has a false sense of coldness.

The indoor sound may be, for example, measured with the microphone of the indoor unit of the air conditioner 20. The indoor sound may include information on the type and volume of a sound. By performing machine learning based on the indoor sound, for example, it is believed that when a user can easily focus on work for silence inside a room or the like, the set temperature of heating tolerated by the user can be inferred to be lower for a certain period of time. Furthermore, it is believed that the set temperature of cooling tolerated by the user can be inferred to be higher for a certain period of time.

The indoor air cleanliness may be, for example, measured with a sensor of the indoor unit of the air conditioner 20. The indoor air cleanliness may include, for example, information on carbon dioxide concentration, etc. By performing machine learning based on the indoor air cleanliness, for example, it is believed that when a user is likely to fall asleep because of a relatively high concentration of carbon dioxide, the set temperature of heating tolerated by the user can be inferred to be lower for a certain period of time to lower indoor temperature to reduce drowsiness.

### (((Information on Conditions Affecting Air Conditioning Load)))

The information on conditions affecting an air conditioning load is information on conditions affecting an air conditioning load when the air conditioner 20 has been operated. The information on conditions affecting an air conditioning load may include at least one of, for example, outdoor temperature, outdoor humidity, solar irradiance, and the number of people inside a room. The outdoor temperature is the temperature of the outside of a building (outside a room) in which the air conditioner 20 is installed. The outdoor humidity is humidity outside a room. The solar irradiance is solar irradiance outside a room. The solar irradiance may be detected with a solar irradiance sensor provided in the outdoor unit of the air conditioner 20. The number of people inside a room is the number of users present in a room. The number of people inside a room may be, for example, estimated by AI based on an image captured by the camera of the indoor unit of the air conditioner 20. Alternatively, the number of people inside a room may be, for example, obtained from the person exit management system of an office or the like.

### ((Information Indicating Operation Setting))

The information indicating an operation setting is information indicating the operation setting of the air conditioner 20 when the air conditioner 20 has been operated. The information indicating an operation setting may include at least one of, for example, condensation temperature, evaporation temperature, the degree of opening of the expansion valve 204, the rotational speed of the compressor 201, the rotational speed of the indoor fan 209, and the rotational speed of the outdoor fan 208.

The condensation temperature is saturation temperature at the pressure of a refrigerant in a condenser. During cooling operation, the condensation temperature may be calculated based on the pressure of the refrigerant taken in into the outdoor heat exchanger 203 measured with a pressure sensor provided at the suction port of the outdoor heat exchanger 203. Furthermore, during heating operation, the condensation temperature may be calculated based on the pressure of the refrigerant taken in into the indoor heat exchanger 207 measured with a pressure sensor provided at the suction port of the indoor heat exchanger 207.

The evaporation temperature is saturation temperature at the pressure of a refrigerant in an evaporator. During cooling operation, the evaporation temperature may be calculated based on the pressure of the refrigerant taken in into the indoor heat exchanger 207. Furthermore, during heating operation, the evaporation temperature may be calculated based on the pressure of the refrigerant taken in into the outdoor heat exchanger 203.

The degree of opening of the expansion valve 204 may be, for example, a value calculated based on the number of pulses of a signal fed to the pulse motor of the expansion valve 204. The rotational speed of the compressor 201 is the rotational speed of the motor of the compressor 201, and may be, for example, calculated based on information on the frequency of an alternating current supplied to the motor of the compressor 201 by the controller 40. The rotational speed of the indoor fan 209 is the rotational speed of the motor of the indoor fan 209, and may be, for example, calculated based on information on the frequency of an alternating current supplied to the motor of the indoor fan 209 by the controller 40. The rotational speed of the outdoor fan 208 is the rotational speed of the motor of the outdoor fan 208, and may be, for example, calculated based on information on the frequency of an alternating current supplied to the motor of the outdoor fan 208 by the controller 40.

### ((Information on Power Consumption))

The information on power consumption is information on the power consumption of the air conditioner 20 when the air conditioner 20 has been operated. The information on power consumption may include at least one of, for example, a power consumption amount integrated value, a power consumption peak value, a current value, a high-pressure pressure, a low-pressure pressure, a compressor rotational speed, and information indicating compressor operating efficiency.

The power consumption amount integrated value is the integrated value of the amount of power consumption of the air conditioner 20 within a predetermined period of time (for example, the last ten minutes). The power consumption peak value is, for example, the peak value of the power consumption of the air conditioner 20 within a predetermined period of time. The current value is, for example, the average current value of the air conditioner 20 within a predetermined period of time.

The high-pressure pressure is the average high-pressure pressure value of the air conditioner 20 within a predetermined period of time. The high-pressure pressure is a high-pressure pressure (hereinafter also simply referred to as "high pressure" as appropriate) in the refrigeration cycle of the air conditioner 20, and may be, for example, the pressure of the refrigerant compressed and discharged by the compressor 201 (the discharge pressure of the compressor 201) or the pressure of the refrigerant in the condenser.

The low-pressure pressure is the average low-pressure pressure value of the air conditioner 20 within a predetermined period of time. The low-pressure pressure is a low-pressure pressure (hereinafter also simply referred to as "low pressure" as appropriate) in the refrigeration cycle of the air conditioner 20, and may be, for example, the pressure of the refrigerant taken in into the compressor 201 (the pressure of the refrigerant before being compressed by the compressor 201).

The operating efficiency of the compressor 201 is, for example, the efficiency of compressing the refrigerant with predetermined power consumption. The operating efficiency of the compressor 201, for example, becomes highest when the rotational speed of the compressor 201 is a predetermined value. For example, in the case of performing cooling operation or heating operation with an excessively low rotational speed of the compressor 201 when the air conditioning load is excessively low because of a small difference between indoor temperature and set temperature, the operating efficiency of the compressor 201 excessively decreases. Furthermore, for example, in the case of performing cooling operation or heating operation with an excessively high rotational speed of the compressor 201 when the air conditioning load is excessively high because of a large difference between indoor temperature and set temperature, the operating efficiency of the compressor 201 excessively decreases.

By setting the rotational speed of the compressor 201 at a predetermined value that causes the operating efficiency of the compressor 201 to be high and adjusting the rotational speeds of the outdoor fan 208 and the indoor fan 209, it is possible to conserve energy while reducing a decrease in user comfort.

In this case, for example, when the air conditioning load is excessively low, the rotational speed of the compressor 201 is set at the predetermined value while the rotational speeds of the outdoor fan 208 and the indoor fan 209 are relatively reduced, and in the case of cooling operation, the operation of the compressor 201 may be temporarily stopped when the indoor temperature becomes lower than the set temperature by a threshold or more. Furthermore, in the case of heating operation, the operation of the compressor 201 may be likewise temporarily stopped when the indoor temperature becomes higher than the set temperature by a threshold or more.

Furthermore, for example, when the air conditioning load is excessively high, the rotational speed of the compressor 201 may be set at the predetermined value while the rotational speeds of the outdoor fan 208 and the indoor fan 209 are relatively increased.

Next, the learning part 13 of the information processing apparatus 10 performs machine learning based on a data set including a combination of the information indicating an environment when the air conditioner 20 has been operated, the information indicating the operation setting of the air conditioner 20 when the air conditioner 20 has been operated, and the information on power consumption when the air conditioner 20 has been operated (step S102).

Here, the learning part 13 of the information processing apparatus 10 may, for example, learn, by machine learning, a regression problem to infer information on power consumption based on an input with supervised learning. The regression problem is, for example, a problem that predicts a continuous value. This makes it possible to infer information on power consumption with each operation setting with respect to an environment in which the air conditioner 20 is operated.

In this case, the learning part 13 of the information processing apparatus 10 may, for example, perform machine learning using linear regression (linear regression). In this case, the learning part 13 of the information processing apparatus 10 may, for example, perform machine learning using the method of least squares or the like, using information on power consumption as an objective variable (response variable, dependent variable) and using information on at least one item included in information indicating an environment when the air conditioner 20 has been operated and information indicating the operation setting of the air conditioner 20 when the air conditioner 20 has been operated as an explanatory variable (input variable, independent variable).

Furthermore, the learning part 13 of the information processing apparatus 10 may, for example, perform machine learning using nonlinear regression (nonlinear regression). In this case, the learning part 13 of the information processing apparatus 10 may perform machine learning using, for example, a regression (recurrent) neural network (Recurrent neural network, RNN), a general regression neural network (General Regression Neural Network), a random forest (Random Forest), a support vector machine (support vector machine, SVM) or the like.

Furthermore, the learning part 13 of the information processing apparatus 10 performs machine learning of an operation setting with which user comfort and information on power consumption satisfy a predetermined condition, based on an input with reinforcement learning. In this case, the learning part 13 of the information processing apparatus 10 performs reinforcement learning with the DQN (deep Q-network) or the like, using a value determined based on a first index that increases as user comfort increases and a second index that increases as power consumption decreases as a reward. In this case, the learning part 13 of the information processing apparatus 10 performs reinforcement learning, determining a first coefficient and a second coefficient based on information specified by a user and using a value determined based on a value obtained by multiplying the value of the first index by the first coefficient and a value obtained by multiplying the value of the second index by the second coefficient as a reward. For example, when a user specifies "a preference for comfort" through a remote control input or the like, the learning part 13 of the information processing apparatus 10 may set "1.1" as the value of the first coefficient and set "0.9" as the value of the second coefficient. Furthermore, when a user specifies "a preference for energy conservation," the learning part 13 of the information processing apparatus 10 may set "0.9" as the value of the first coefficient and set "1.1" as the value of the second coefficient.

Furthermore, in this case, the learning part 13 of the information processing apparatus 10 may, for example, perform reinforcement learning with the action option of changing at least one of the target temperature, target humidity, set airflow volume, and set airflow direction of the air conditioner 20. Furthermore, in this case, the learning part 13 of the information processing apparatus 10 may, for example, perform reinforcement learning with the action option of changing at least one of the condensation temperature, evaporation temperature, expansion valve opening degree, compressor rotational speed, indoor unit fan rotational speed, and outdoor unit fan rotational speed of the air conditioner 20.

### <<Process During Inference>>

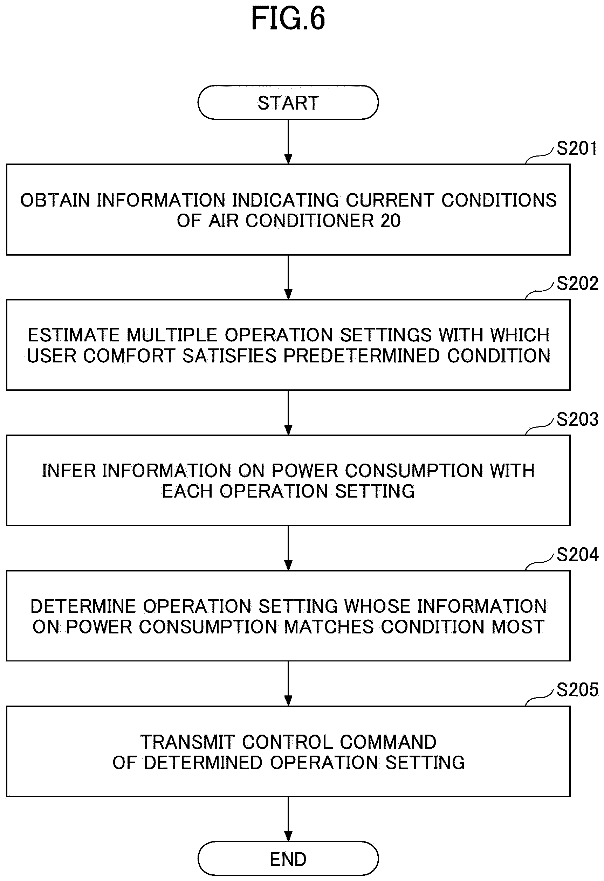

Next, an example of the process of the air conditioning system 1 during inference according to the first embodiment is described with reference to FIG. 6. FIG. 6 is a flowchart illustrating an example of the process of the air conditioning system 1 during inference according to the first embodiment. The following process may be, for example, periodically executed during the operation of the air conditioner 20.

At step S201, the obtaining part 11 of the information processing apparatus 10 obtains information indicating the current conditions of the air conditioner 20. Here, the obtaining part 11 of the information processing apparatus 10 may, for example, obtain information indicating the current conditions of the air conditioner 20 from the air conditioner 20 at predetermined time intervals (of, for example, 10 minutes).

When performing learning using reinforcement learning, the information processing apparatus 10 infers an operating setting based on information indicating the obtained current conditions of the air conditioner 20, and proceeds to the process of step S205 described below.

In the following, an example of the case where the learning part 13 of the information processing apparatus 10 is performing machine learning using supervised learning is described.

Next, the inference part 14 of the information processing apparatus 10 estimates multiple operation settings with which user comfort satisfies a predetermined condition from information indicating the current environment of the air conditioner 20 (step S202). Here, the inference part 14 of the information processing apparatus 10 may, for example, determine multiple operation settings including a combination of temperature, humidity and an air flow for which the PMV (Predicted Mean Vote) value is within the limits of -0.5 to 0.5, based on the indoor radiation temperature, the amount of user clothing, the amount of user activity obtained at step S201. The PMV value represents human thermal sensation on a numerical scale of -3 to 3.

The predetermined condition for user comfort may be specified by a user of the air conditioner 20. In this case, when the user specifies a "comfort-oriented" mode using the remote controller of the air conditioner 20 or the like, the inference part 14 of the information processing apparatus 10 may, for example, determine multiple operation settings including a combination of temperature, humidity and an air flow for which the PMV value is within the limits of -0.2 to 0.2. Furthermore, when the user specifies a "energy conservation-oriented" mode, the inference part 14 of the information processing apparatus 10 may, for example, determine multiple operation settings including a combination of temperature, humidity and an air flow for which the PMV value is within the limits of -0.8 to 0.8.

Furthermore, the inference part 14 of the information processing apparatus 10 may, for example, determine multiple operation settings including a combination of temperature, humidity and an air flow for which the SET* (Standard new Effective Temperature) value is within predetermined limits.

Furthermore, the inference part 14 of the information processing apparatus 10 may, for example, estimate multiple operation settings with which user comfort satisfies a predetermined condition using AI. In this case, when the user inputs a report on comfort using a remote controller or the like, the inference part 14 of the information processing apparatus 10 obtains the details of the report, information indicating the environment of the air conditioner 20 at the time, and the operation setting of the air conditioner 20 at the time. Then, the inference part 14 of the information processing apparatus 10 may learn, machine learning, a regression problem to infer user comfort based on the information indicating the environment of the air conditioner 20 and the operation setting of the air conditioner 20.

In this case, the learning part 13 of the information processing apparatus 10 may, for example, perform machine learning using linear regression (linear regression) or nonlinear regression (nonlinear regression). In the case of using nonlinear regression, the learning part 13 of the information processing apparatus 10 may perform machine learning using, for example, a regression (recurrent) neural network (Recurrent neural network, RNN), a general regression neural network (General Regression Neural Network), a random forest (Random Forest), a support vector machine (support vector machine, SVM) or the like.

The report on comfort input from the user may be, for example, information indicating discomfort input by the user. In this case, the information on comfort input by the user may include reports of discomfort, such as that "it is hot," "it is cold," "humidity is high," "humidity is low," "air is strong," and "air is weak."

Furthermore, the report on comfort input from the user may include a user tolerance for operation settings according to respective conditions. Examples of "tolerance" are described in a third embodiment.

The inference part 14 of the information processing apparatus 10 may, for example, infer the probability of being reported as uncomfortable by the user with respect to each operation setting and determine multiple operation settings including a combination of temperature, humidity, and an air flow for which the probability is less than or equal to a predetermined threshold.

Next, the inference part 14 of the information processing apparatus 10, based on the obtained information indicating the current conditions of the air conditioner 20 and the learning result of the process of step S102 of FIG. 4, infers information on power consumption in the case of operating the air conditioner 20 under the current conditions with each of the operation settings estimated at step S202 (step S203). Here, the inference part 14 of the information processing apparatus 10 may, for example, infer information on power consumption in the case of operating the air conditioner 20 in the current environment of the air conditioner 20, setting the combination of temperature, humidity, and an air flow at each operation setting estimated at step S202 as target temperature (set temperature), target humidity (set humidity), and a target air flow (set airflow volume and set airflow direction).

Next, the inference part 14 of the information processing apparatus 10 determine an operation setting whose information on power consumption estimated at step S203 matches a condition most among the operation settings estimated at step S202 (step S204).

Next, the transmission and reception part 15 of the information processing apparatus 10 transmits a control command to cause the air conditioner 20 to operate with the determined operation setting to the air conditioner 20 (step S205). Here, the transmission and reception part 15 of the information processing apparatus 10 may, for example, transmit a control command whose target temperature, target humidity, and target air flow are the temperature, humidity, and air flow, respectively, of the determined operation setting to the air conditioner 20.

### <Variation>

Each functional part of the information processing apparatus 10 may be, for example, implemented by cloud computing constituted of one or more computers. Furthermore, at least part of the above-described processing of each functional part of the information processing apparatus 10 may be executed by the controller 40 of the air conditioner 20. Furthermore, the information processing apparatus 10 and the controller 40 may be configured as a single apparatus.

Furthermore, a single information processing apparatus 10 may create a single trained model based on information obtained from each of multiple air conditioners 20 and distribute the created single trained model to the air conditioners 20.

### [Second Embodiment]

### <System Configuration>

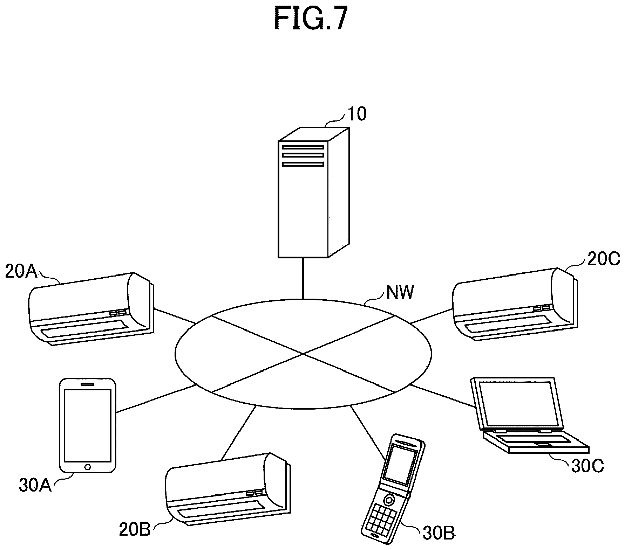

The system configuration of an information processing system 1000 according to a second embodiment is described. FIG. 7 is a diagram illustrating an example of the system configuration of the information processing system 1000 according to the second embodiment. As illustrated in FIG. 7, the information processing system 1000 according to the second embodiment includes the information processing apparatus 10; an apparatus 20A (an example of "first apparatus"), an apparatus 20B, and an apparatus 20C (which are hereinafter simply referred to as "apparatus(es) 20" where there is no need to distinguish among them); and a terminal 30A, a terminal 30B, and a terminal 30C (which are hereinafter simply referred to as "terminal(s) 30" where there is no need to distinguish among them). The number of information processing apparatuses 10, the number of apparatuses 20, and the number of terminals 30 are not limited to the example of FIG. 7.

The information processing apparatus 10 and the apparatuses 20 may be connected and information processing apparatus 10 and the terminals 30 may be connected to be able to perform communications via a network NW, whose examples include the Internet, a wireless LAN (Local Area Network), cellular phone networks of LTE (Long Term Evolution), 5G, etc., a LAN, and a signal line. The apparatuses 20 may be installed in, for example, houses, offices, public facilities, etc. The information processing apparatus 10 may be, for example, a cloud server. The information processing apparatus 10 may be, for example, accommodated in the apparatuses 20 (for example, the indoor unit housings of air conditioners).

The information processing apparatus 10 infers power consumption based on which it is determined whether the operation setting of an apparatus according to a surrounding environment when the apparatus 20A or the like is operated is an energy-conserving operation setting (standard power consumption), based on a data set obtained from each of the apparatuses 20, the data set including information indicating a surrounding environment when the apparatus 20 has been operated and information on power consumption when the apparatus 20 has been operated.

Furthermore, the information processing apparatus 10 infers the operation setting of the apparatus 20A or the like that conserves energy based on a data set obtained from each of the apparatuses 20, the data set including information indicating a surrounding environment when the apparatus 20 has been operated, the inferred standard power consumption, and information on power consumption when the apparatus 20 has been operated. Furthermore, the information processing apparatus 10 imparts the inferred operation setting to a user of the apparatus 20A or the like.

The apparatuses 20 may be, for example, various apparatuses such as air conditioners (air conditioners), refrigerators, water heaters, and lights, and may include an IoT (Internet of Things) device that transmits various kinds of measured information to the information processing apparatus 10.

The terminals 30 are, for example, terminals such as smartphones, cellular phones, tablets, and personal computers used by users of the apparatuses 20.

The user of each apparatus 20 registers the IDs and communication addresses of the apparatus 20 and the terminal 30 that the user uses with the information processing apparatus 10 in advance, so that the information processing apparatus 10 can impart information such as an operation setting recommended to each apparatus 20 to the terminal 30 of the user of each apparatus 20.

### [Second Embodiment]

In the second embodiment, an example where the standard power consumption, which is power consumption based on which it is determined whether an operation setting according to a surrounding environment when the apparatus 20A is operated is an energy-conserving operation setting, etc., are inferred based on a data set including information indicating surrounding environments when the apparatuses 20 have been operated and information on power consumption when the apparatuses 20 have been operated is described. According to the second embodiment, it is possible to determine an appropriate operation setting of an apparatus.

### <Functional Configuration>

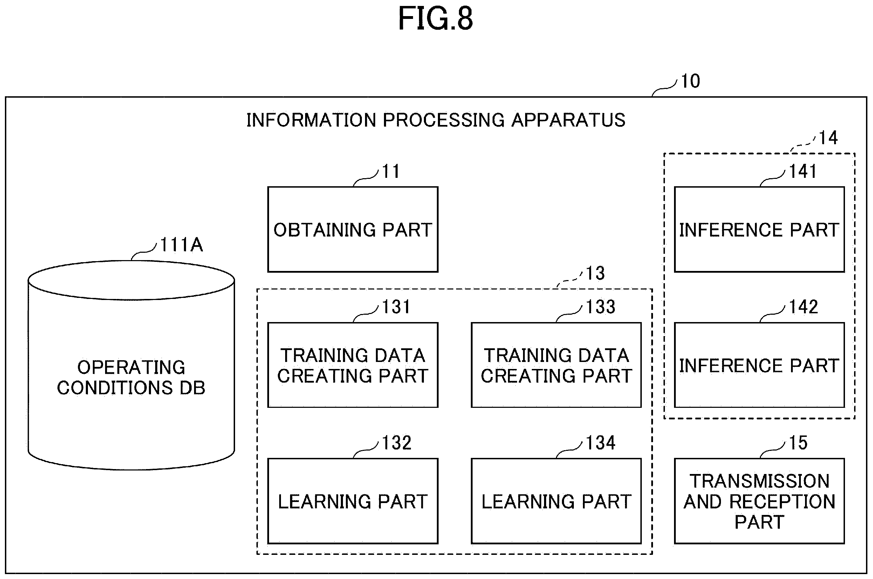

Next, a functional configuration of the information processing apparatus 10 according to the second embodiment is described with reference to FIG. 8. FIG. 8 is a diagram illustrating an example of the functional blocks of the information processing apparatus 10 according to the second embodiment.

The information processing apparatus 10 according to the second embodiment includes an operating conditions DB (database) 111A.

The obtaining part 11 according to the second embodiment obtains information on the operating conditions of each of the apparatuses 20 and records the information in the operating conditions DB 111. The information on operating conditions is an example of "information indicating a situation."

The learning part 13 according to the second embodiment includes a training data creating part 131, a learning part 132, a training data creating part 133, and a learning part 134. Furthermore, the inference part 14 according to the second embodiment includes an inference part 141 and an inference part 142.

The training data creating part 131 creates training data for learning (machine-learning) the standard power consumption according to a surrounding environment when the apparatus 20 is operated based on information obtained by the obtaining part 11. The learning part 132 learns the standard power consumption according to a surrounding environment when the apparatus 20 is operated based on the trained data created by the training data creating part 131.

The training data creating part 133 creates training data for learning an operation setting according to a surrounding environment when the apparatus 20 is operated and the standard power consumption, based on the information obtained by the obtaining part 11. The learning part 134 learns an operation setting according to a surrounding environment when the apparatus 20 is operated and the standard power consumption, based on the training data created by the training data creating part 133.

The inference part 141 infers the standard power consumption with respect to the current surrounding environment of the apparatus 20A based on the information on the current operating conditions of the apparatus 20A obtained by the obtaining part 11 and the result of the learning by the learning part 132.

The inference part 142 infers the operation setting of the apparatus 20A that is energy-conserving in the environment based on information indicating the current environment of the apparatus 20A, the result of learning the operating setting by the learning part 134, and the standard power consumption with respect to the current environment of the apparatus 20A inferred by the inference part 141.

The transmission and reception part 15 according to the second embodiment imparts the operation setting of the apparatus 20A inferred by the inference part 142 to the user of the apparatus 20A.

### <Processes>

In the following, the case where the apparatuses 20 are air conditioners (air conditioners) is described as an example. The disclosed technology, however, may be applied to various apparatuses 20 such as refrigerators, water heaters, and lights.

### <<Process During Learning>>

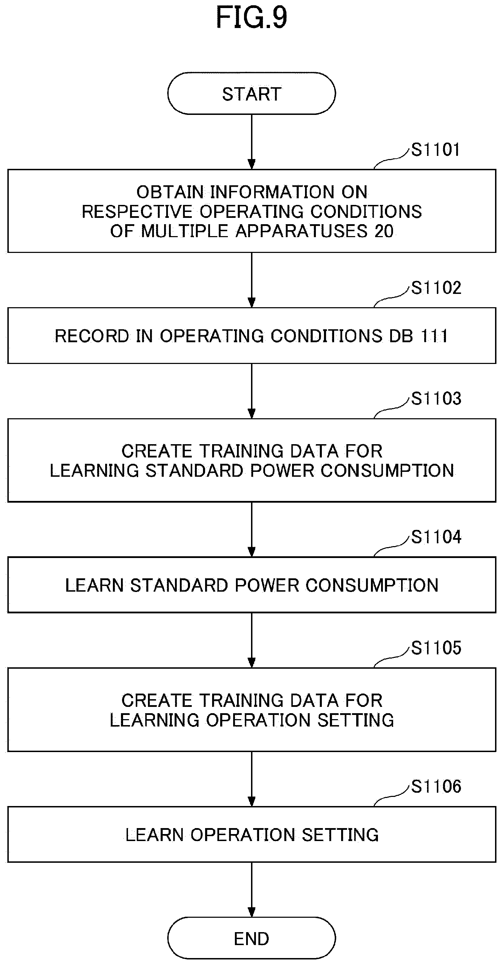

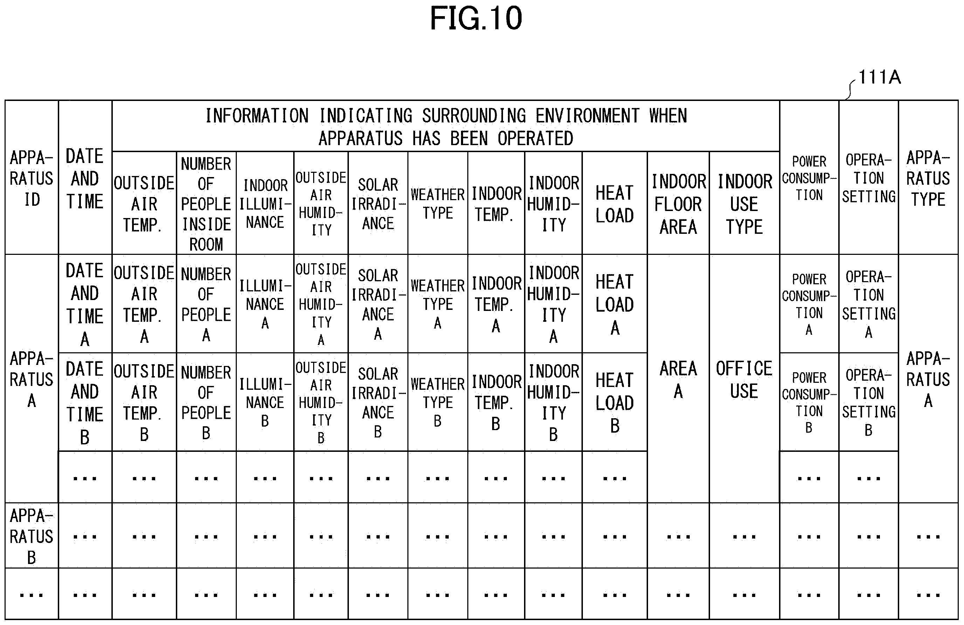

An example of the process of the information processing apparatus 10 during learning according to the second embodiment is described with reference to FIGS. 9 and 10. FIG. 9 is a flowchart illustrating an example of the process of the information processing apparatus 10 during learning according to the second embodiment. FIG. 10 is a diagram illustrating an example of the history of operating conditions stored in the operating conditions DB 111 according to the embodiment.

### (Obtaining of Training Data)

At step S1101, the obtaining part 11 of the information processing apparatus 10 obtains information on the operating conditions of each of the apparatuses 20. Here, the obtaining part 11 of the information processing apparatus 10 may, for example, obtain information on the current operating conditions of each apparatus 20 from each apparatus 20 at predetermined time intervals (of, for example, one hour). Alternatively, the obtaining part 11 of the information processing apparatus 10 may obtain the history of information on the operating conditions of each apparatus 20 from each apparatus 20 at predetermined time intervals (for example, once a day). The obtaining part 11 of the information processing apparatus 10 may, for example, obtain the history of information on the operating conditions of each apparatus 20 stored in an external server.

Here, the information on operating conditions may include, for example, an apparatus ID that is the ID of the apparatus 20, the date and time of the operation of the apparatus 20, information indicating a surrounding environment when the apparatus 20 has been operated (for example, of the date and time), power consumption when the apparatus has been operated, and information on an operating setting when the apparatus has been operated.

Next, the obtaining part 11 of the information processing apparatus 10 records the obtained information on operating conditions in the operating conditions DB 111 (step S1102).

According to the example of FIG. 10, a set (record) of information indicating a surrounding environment, power consumption, and information on an operation setting when the apparatus 20 has been operated is stored in the operating conditions DB 111, being correlated with the apparatus ID and the date and time. Furthermore, an apparatus type is stored in correlation with the apparatus ID.

The information indicating a surrounding environment when the apparatus 20 has been operated may include, for example, outside air temperature, the number of people inside a room, indoor illuminance, outside air humidity, solar irradiance, weather type, indoor temperature, indoor humidity, heat load, indoor floor area, and indoor use type.

The outside air temperature is temperature outside a building in which the apparatus 20 is installed. The outside air temperature may be, for example, measured with a temperature sensor provided in the air conditioner outdoor unit of the apparatus 20.

The number of people inside a room is the number of people inside a room in which the apparatus 20 is installed. The number of people inside a room may be, for example, measured by the apparatus 20 based on information detected with a radiation temperature sensor, a camera, or the like provided in the air conditioner indoor unit of the apparatus 20.

The indoor luminance is luminance inside a room in which the apparatus 20 is installed. The indoor luminance may be, for example, measured with an illuminance sensor provided in the air conditioner indoor unit of the apparatus 20.

The outside air humidity is humidity outside a building in which the apparatus 20 is installed. The outside air humidity may be, for example, measured with a humidity sensor provided in the air conditioner outdoor unit of the apparatus 20.

The solar irradiance is solar irradiance outside a building in which the apparatus 20 is installed. The solar irradiance may be, for example, measured with a solar irradiance sensor (pyranometer) provided in the outdoor unit of the apparatus 20.

The weather type is the type of weather in a region where the apparatus 20 is installed. Examples of weather types may include types such as sunny, cloudy, rainy, and snowy. The weather type is, for example, preset in the apparatus 20. The weather type may also be determined based on information on a region in which the apparatus 20 is installed and information on the weather type of each region at the date and time obtained from the server of a meteorological bureau or the like.

The indoor temperature and the indoor humidity are temperature and humidity, respectively, inside a room in which the apparatus 20 is installed. The indoor temperature and the indoor humidity may be, for example, measured with a temperature sensor and a humidity sensor, respectively, provided in the air conditioner outdoor unit of the apparatus 20.

The heat load is, for example, the amount of heat entering and exiting a room (chamber) in which the apparatus 20 is installed and the amount of heat generated in the chamber. For example, the heat load increases when the chamber in which the apparatus 20 is installed has a lot of air replacement due to the entry and exit of outside air or through a ventilation fan, has a high ceiling, or is in a building of low thermal insulation, such as a wooden building. The heat load may be a value estimated by the apparatus 20 or the like based on the history of information on the operating conditions of the apparatus 20. Alternatively, the value of the air conditioning capacity (power) of the apparatus 20 may be employed as the heat load.

The indoor floor area is the floor area of a room in which the apparatus 20 is installed. The indoor floor area may be, for example, pre-stored in the apparatus 20 by the setting operation of each user.

The indoor use type is the type of use (business type) of the inside of a room in which the apparatus 20 is installed. Examples of indoor use types may include household use, office use (general business office use), hairdressing salon use, eating and drinking establishment use, and server room use. The indoor use type may be, for example, pre-stored in the apparatus 20 by the setting operation of each user.

The power consumption is power consumption when the apparatus 20 has been operated. The power consumption is the total value (cumulative value) of electric power consumed per predetermined time at each date and time. The power consumption may be, for example, calculated by the apparatus 20 based on electric power actually consumed per predetermined time.

The operation setting is an operation setting when the apparatus 20 has been operated. The operation setting may include, for example, a setting with respect to the operation of the apparatus 20 provided by a user operating the remote controller of the apparatus 20 or the like. The operation setting may include, for example, an operating mode, set temperature, and a set airflow volume. Examples of operating modes include automatic operation, cooling operation, heating operation, dehumidifying operation, and fan operation.

The apparatus type is the type of the apparatus 20. Examples of apparatus types may include types such as an air conditioner, a refrigerator, a water heater, and a lighting. The item of the apparatus type may be preset apparatus 20 by apparatus 20.

### (Learning of Standard Power Consumption)

Next, the training data creating part 131 of the information processing apparatus 10 creates training data for learning the standard power consumption according to a surrounding environment when the apparatus 20 is operated, based on a data set recorded in the operating conditions DB 111 (step S1103).

Here, the training data creating part 131 of the information processing apparatus 10 may, for example, employ, as training data for learning the standard power consumption, a data set including a combination of at least one item (first item) included in the information indicating a surrounding environment when the apparatus 20 has been operated and the power consumption recorded in the operating conditions DB 111. In this case, the training data creating part 131 of the information processing apparatus 10 may, for example, use information on at least one item included in the information indicating a surrounding environment when the apparatus 20 has been operated as an input and use the power consumption as ground truth data, and employ a combination (set) of the input and the ground truth data as the training data for learning the standard power consumption.

Next, the learning part 132 of the information processing apparatus 10 learns, by machine learning, the standard power consumption for determining whether the operation setting of the apparatus 20 corresponding to a surrounding environment when the apparatus 20 is operated is an energy-conserving operation setting, based on the created training data (step S1104).

Here, the learning part 132 of the information processing apparatus 10 may, for example, learn, by machine learning, a regression problem to infer power consumption based on an input with supervised learning. The regression problem is, for example, a problem that predicts a continuous value. This makes it possible to employ the average power consumption of the apparatuses 20 used by users in their respective surrounding environments and with their respective operation settings as the standard power consumption based on which to determine whether the operation setting is energy-conserving in each surrounding environment of the apparatus 20A. Therefore, for example, demanding such unreasonable energy conservation as to impair user comfort to a certain extent or more is reduced. Furthermore, for example, when the public awareness of energy conservation is increasing, it is possible to request energy conservation in line with the public sense.

In this case, the learning part 132 of the information processing apparatus 10, for example, perform machine learning using linear regression (linear regression). In this case, the learning part 132 of the information processing apparatus 10 may, for example, perform machine learning using the method of least squares or the like, using power consumption as an objective variable (response variable, dependent variable) and using information on at least one item included in information indicating a surrounding environment when the apparatus 20 has been operated as an explanatory variable (input variable, independent variable).

Furthermore, the learning part 132 of the information processing apparatus 10 may, for example, perform machine learning using nonlinear regression (nonlinear regression). In this case, the learning part 132 of the information processing apparatus 10 may perform machine learning using, for example, a regression (recurrent) neural network (Recurrent neural network, RNN), a general regression neural network (General Regression Neural Network), a random forest (Random Forest), a support vector machine (support vector machine, SVM) or the like.

Furthermore, the learning part 132 of the information processing apparatus 10 may, for example, calculate the representative value of power consumption when the apparatus 20 has been operated with respect to each surrounding environment when the apparatus 20 has been operated and learn, by machine learning, that each calculated representative value is the standard power consumption with respect to each surrounding environment when the apparatus 20 has been operated. The learning part 132 of the information processing apparatus 10 may calculate, for example, an average, a median, a mode or the like as the representative value. Furthermore, the learning part 132 of the information processing apparatus 10 may calculate, for example, the average of an average, a median, a mode, etc., as the representative value.

### (Learning of Operation Setting)

Next, the training data creating part 133 of the information processing apparatus 10 creates training data for learning an operation setting according to a surrounding environment when the apparatus 20 is operated and the standard power consumption based on a data set recorded in the operating conditions DB 111 (step S1105).

Here, the training data creating part 133 of the information processing apparatus 10 may, for example, employ, as the training data for learning an operation setting, a data set including a combination of information on at least one item (second item) included in the information indicating a surrounding environment when the apparatus 20 has been operated, the power consumption, and the operation setting of the apparatus 20 recorded in the operating conditions DB 111. The above-described first item and second item may be either the same or different.

In this case, the training data creating part 133 of the information processing apparatus 10 may, for example, use the information on at least one item included in the information indicating a surrounding environment when the apparatus 20 has been operated and the power consumption as an input and use the operation setting of the apparatus 20 as ground truth data, and employ a combination (set) of the input and the ground truth data as the training data for learning an operation setting.

Next, the learning part 134 of the information processing apparatus 10 learns, by machine learning, an operation setting according to a surrounding environment when the apparatus 20 is operated and the standard power consumption based on the created training data (step S1106). Here, the learning part 134 of the information processing apparatus 10 may, for example, learn, by machine learning a classification problem to infer an operation setting based on an input with supervised learning. The classification problem is, for example, a problem to predict a discrete value. In this case, the learning part 134 of the information processing apparatus 10 may perform machine learning using, for example, logistic regression, a random forest (Random Forest), boosting (Boosting), a support vector machine (support vector machine, SVM), a neural network (Neural Network) or the like. This makes it possible to infer the optimum operation setting of the apparatus 20 according to the surrounding environment of the apparatus 20 and the standard power consumption.

### <<Process During Inference>>

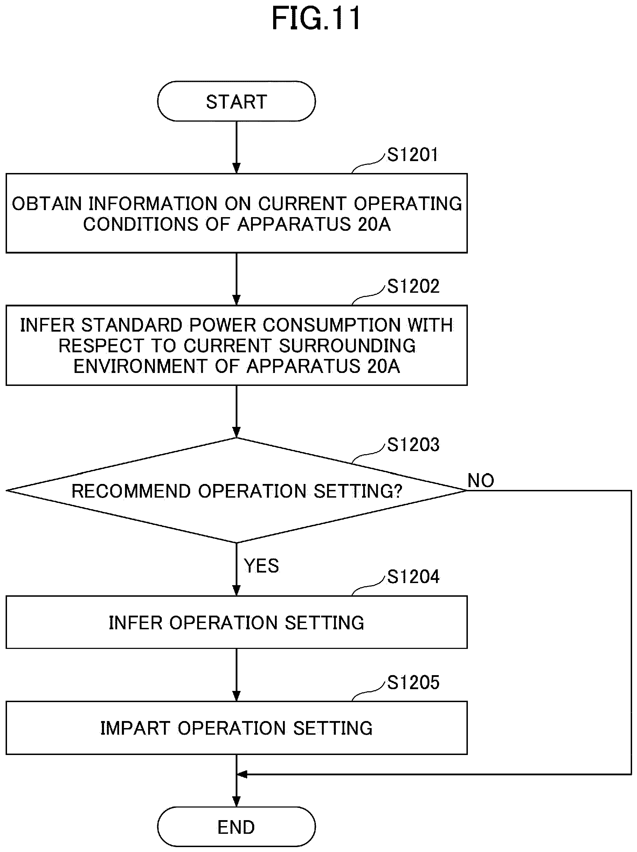

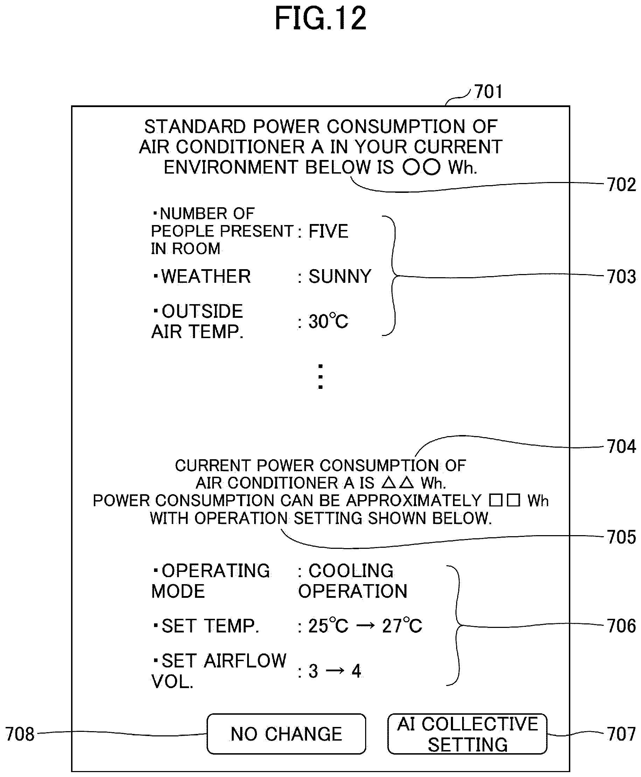

Next, an example of the process of the information processing apparatus 10 during inference according to the second embodiment is described with reference to FIGS. 11 and 12. FIG. 6 is a flowchart illustrating an example of the process of the information processing apparatus 10 during inference according to the second embodiment. FIG. 11 is a diagram illustrating an example of a notification screen of a recommended operation setting according to the embodiment. In the following, an example where inference is performed with respect to the apparatus 20A is described.

At step S1201, the obtaining part 11 of the information processing apparatus 10 obtains information on the current operating conditions of the apparatus 20A. Here, the obtaining part 11 of the information processing apparatus 10 may, for example, obtain information on the current operating conditions of the apparatus 20A from the apparatus 20A at predetermined time intervals (of, for example, one hour).

Next, the inference part 141 of the information processing apparatus 10 infers the standard power consumption with respect to the current surrounding environment of the apparatus 20A based on the obtained information on the current operating conditions of the apparatus 20A and the result of learning the standard power consumption by the process of step S1104 of FIG. 9 (step S1202). Here, the inference part 141 of the information processing apparatus 10 infers the current standard power consumption of the apparatus 20A, using, as an input, the information on the first item used during the learning of the standard power consumption among items included in the information indicating the current surrounding environment of the apparatus 20A and using the result of learning the standard power consumption.

Furthermore, the inference part 141 of the information processing apparatus 10 may, for example, infer the current standard power consumption of the apparatus 20A based on the results of learning by the above-described techniques. In this case, the inference part 141 of the information processing apparatus 10, for example, infers the current standard power consumption of the apparatus 20A based on the respective results of learning by the techniques described in the process of step S1104 of FIG. 9. The inference part 141 of the information processing apparatus 10 may infer the average or the like of the inferred values as the current standard power consumption of the apparatus 20A.

Next, the inference part 142 of the information processing apparatus 10 determines whether to recommend an operation setting that conserves energy to a user A of the apparatus 20A (step S1203). Here, the inference part 142 of the information processing apparatus 10 may, for example, determine whether to recommend an operation setting that conserves energy, based on the current power consumption of the apparatus 20A and the standard power consumption inferred with respect to the current surrounding environment of the apparatus 20A. In this case, the inference part 142 of the information processing apparatus 10 may, for example, determine to recommend an operation setting that conserves energy when the current power consumption of the apparatus 20A is greater than the inferred standard power consumption by a predetermined threshold and determine not to recommend an operation setting that conserves energy when the current power consumption of the apparatus 20A is not greater than the inferred standard power consumption by the predetermined threshold.

In the case of determining not to recommend (NO at step S1203), the inference part 142 of the information processing apparatus 10 ends the process and does not execute the following process.

In the case of determining to recommend (YES at step S1203), the inference part 142 of the information processing apparatus 10 infers an operation setting that is energy-conserving in the environment based on the information indicating the current surrounding environment of the apparatus 20A, the result of learning an operation setting by the process of step S1106 of FIG. 9, and the standard power consumption with respect to the current surrounding environment of the apparatus 20A inferred by the process of step S1202 (step S1204). Here, the inference part 142 of the information processing apparatus 10 infers the operation setting, using, as an input, information on the second item used during the learning of the operation setting among items included in the information indicating the current surrounding environment of the apparatus 20A and the standard power consumption, and using the result of learning the operation setting. This makes it possible to infer such an operation setting as to cause the value of power consumption in the current surrounding environment of the apparatus 20A to approximately match the value of the standard power consumption in the environment.

In the process of step S1204, the inference part 142 of the information processing apparatus 10 may correct the value of the standard power consumption with respect to the current surrounding environment of the apparatus 20A inferred in the process of step S1202 and employ the corrected value as the standard power consumption. In this case, the inference part 142 of the information processing apparatus 10 may, for example, infer the operation setting, using a value lower than the value of the inferred standard power consumption by a predetermined amount (for example, 5%) as an input. This makes it possible to infer such an operation setting as to cause the value of power consumption in the current surrounding environment of the apparatus 20A to be lower than the value of the standard power consumption in the environment by a predetermined amount.

Furthermore, the inference part 142 of the information processing apparatus 10 may, for example, correct the value of the standard power consumption based on the value of the current power consumption of the apparatus 20A and the value of the inferred standard power consumption and use the corrected value as the standard power consumption. In this case, the inference part 142 of the information processing apparatus 10 may, for example, infer the operation setting, using a value greater than the value of the inferred standard power consumption by a predetermined mount as the value of the ratio of the value of the current power consumption of the apparatus 20A to the value of the inferred standard power consumption increases. In this case, for example, when the value of the current power consumption of the apparatus 20A is 1.2 times the value of the inferred standard power consumption, the inference part 142 of the information processing apparatus 10 may correct the value of the standard power consumption to 1.1 times the value that is the average of both values and use the corrected value. This makes it possible to infer such an energy-conserving operation setting as to relatively reduce a decrease in comfort for the user A of the apparatus 20A even when, for example, the user A favors a relatively non-energy-conserving operation setting because of a liking for cooling with relatively low set temperature, a liking for operation with a relatively low set airflow volume, or the like.

Next, the transmission and reception part 15 of the information processing apparatus 10 notify the user A of the apparatus 20A of information recommending the inferred operation setting (step S1205). Here, the transmission and reception part 15 of the information processing apparatus 10, for example, transmits information on the inferred operation setting to the terminal 30A, which is the pre-registered notification destination of the user A.

According to the example of FIG. 12, the transmission and reception part 15 of the information processing apparatus 10 causes standard power consumption 702 inferred with respect to the current surrounding environment of the apparatus 20A, information 703 indicating the current surrounding environment of the apparatus 20A, and current power consumption 704 of the apparatus 20A to be displayed in a notification contents display screen 701 on the terminal 30A. Furthermore, the transmission and reception part 15 of the information processing apparatus 10 causes standard power consumption 705 corrected and information 706 on the operation setting inferred in the process of step S1204, an "AI COLLECTIVE SETTING" button 707, and a "NO CHANGE" button 708 to be displayed on the terminal 30A.

In response to the depression of the "AI COLLECTIVE SETTING" button 707, the terminal 30A may, for example, transmit a control signal (remote control command) through radio communications using a wireless LAN or the like and reflect various settings included in the inferred operation setting in the apparatus 20A.

In response to the depression of the "NO CHANGE" button 708, the terminal 30A transmits a notification indicating the user's rejection of the recommended operation setting to the information processing apparatus 10. Here, the notification may include, for example, the user ID of the user of the apparatus 20, the ID of the recommended operation setting, and information indicating the rejection.

For example, when automatic operation by AI (Artificial Intelligence) is allowed by the setting operation of the user A, the transmission and reception part 15 of the information processing apparatus 10 may perform control to change the operation setting of the apparatus 20A to the inferred operation setting. In this case, the transmission and reception part 15 of the information processing apparatus 10 may transmit a control signal to the apparatus 20A via the terminal 30A or may bypass the terminal 30A to transmit a control signal to the apparatus 20A.

### <Variation of Learning and Inference of Standard Power Consumption>

The information processing apparatus 10 may predict future changes in power consumption based on time-series data on outside air temperature or the like obtained from the apparatus 20A, and if a predetermined condition is satisfied, recommend an energy-conserving operation setting to the user A in advance. This, for example, when electric power is expected to be tight on a mid-summer early afternoon or the like, makes it possible to recommend energy conservation during the morning or the like.

In this case, the training data creating part 131 of the information processing apparatus 10 may employ, as training data for learning temporal changes in the standard power consumption, a data set for each of the apparatuses 20, the data set including a combination of temporal changes in (a value at each point of time, time-series data of) information indicating a surrounding environment when each apparatus 20 has been operated and information on temporal changes in power consumption when each apparatus 20 has been operated. In this case, the training data creating part 131 of the information processing apparatus 10 may, for example, use temporal changes in information on at least one item included in the information indicating a surrounding environment when the apparatus 20 has been operated as an input and use temporal changes in power consumption as ground truth data, and employ a combination of the input and the ground truth data as the training data for learning the standard power consumption.

The learning part 132 of the information processing apparatus 10 learns, by machine learning, temporal changes in the standard power consumption based on the training data. In this case, the learning part 132 of the information processing apparatus 10 may, for example, perform machine learning using a regression (recurrent) neural network (Recurrent neural network, RNN).

Then, in the process of step S1203 of FIG. 12, the inference part 142 of the information processing apparatus 10 infers future (subsequent) changes in the power consumption of the apparatus 20A based on the result of the machine learning and time-series data on the surrounding environment of the apparatus 20A at each point of time up to the present, calculates the total value of the power consumption of the apparatus 20A within a predetermined time (for example, within three hours) in the future based on the inferred changes, and if the calculated value is more than or equal to a threshold, determines to recommend an energy-conserving operation setting to the user A of the apparatus 20A.

Then, in the process of step S1204 of FIG. 12, the inference part 142 of the information processing apparatus 10 corrects the value of the standard power consumption with respect to the current surrounding environment of the apparatus 20A inferred in the process of step S1202 based on the calculated total value of power consumption within a predetermined in the future, and employs the corrected value as the standard power consumption. In this case, the inference part 142 of the information processing apparatus 10 may correct the value of the standard power consumption such that reduction in the value of the inferred standard power consumption increases as the total value increases.

### [Third Embodiment]

In the third embodiment, an example where an energy-conserving operation setting according to the surrounding environment of the apparatus 20, etc., is inferred according to a user tolerance for the operation setting is described. According to the third embodiment, it is possible to determine an appropriate operation setting of an apparatus.

The third embodiment is the same as the second embodiment except for a part. Therefore, a description of the same part is omitted as appropriate. In the following, a description of the same part as in the second embodiment is omitted, and only a different part is described.

### <Functional Configuration>

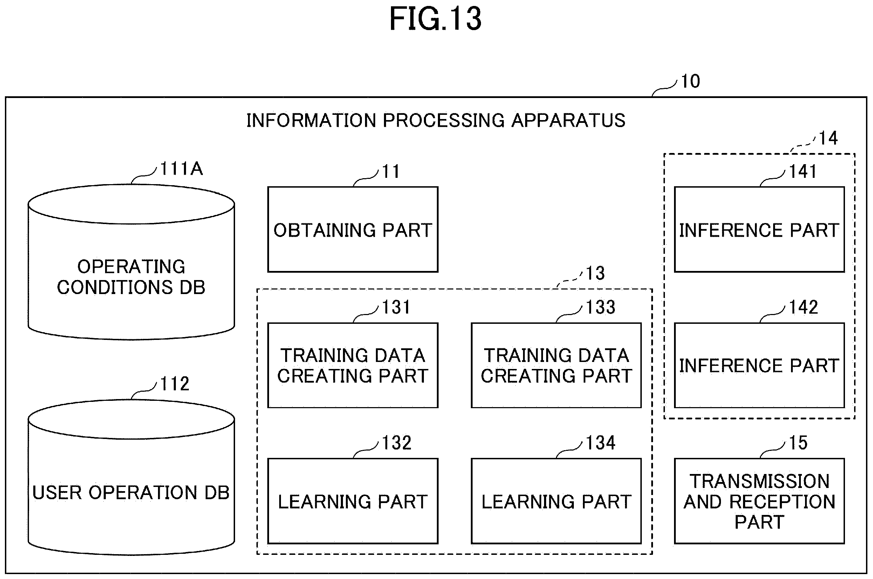

Next, a functional configuration of the information processing apparatus 10 according to the third embodiment is described with reference to FIG. 13. FIG. 13 is a diagram illustrating an example of the functional blocks of the information processing apparatus 10 according to the third embodiment.

Compared with the functional block diagram of the second embodiment, a difference lies in that the third embodiment includes a user operation DB 112. The details of information recorded in the user operation DB 112 are described below.

### <Processes>

In the following, the case where the apparatuses 20 are air conditioners (air conditioners) is described as an example. The disclosed technology, however, may be applied to various apparatuses 20 such as refrigerators, water heaters, and lights.

### <<Process During Learning>>

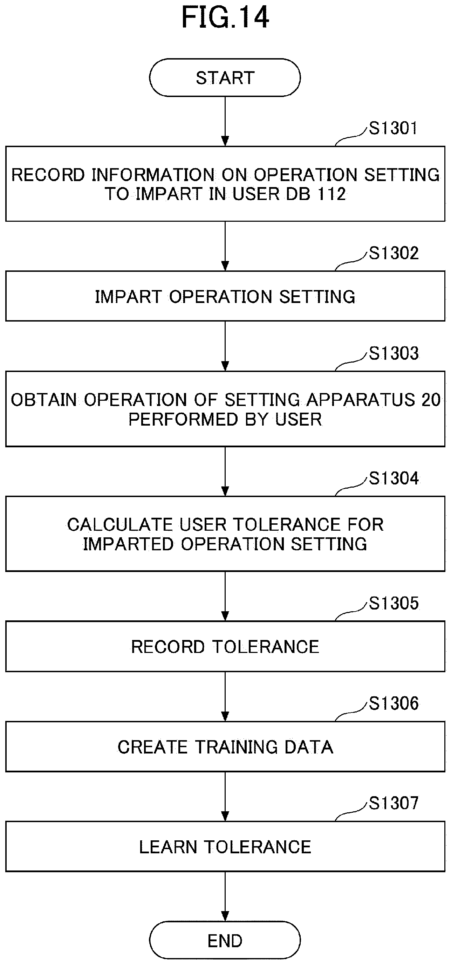

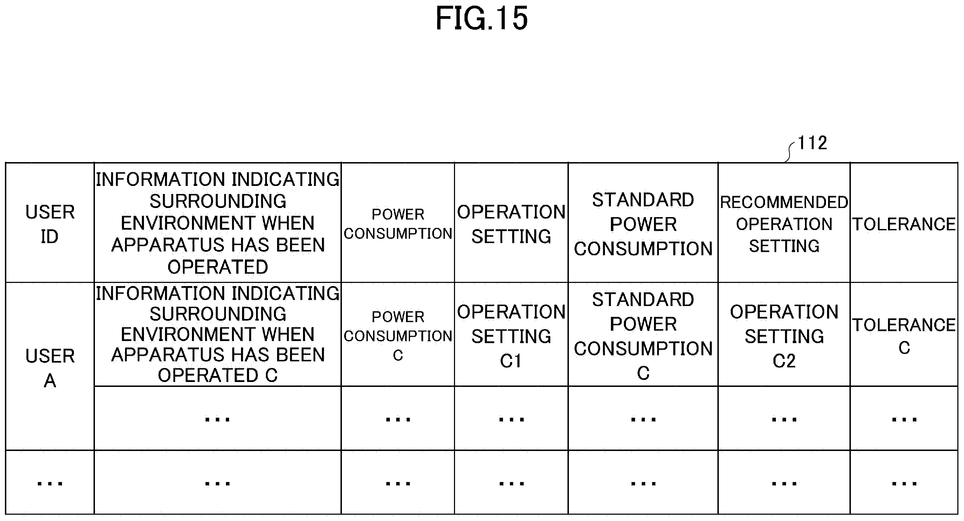

An example of the process of the information processing apparatus 10 during learning according to the third embodiment is described with reference to FIGS. 14 and 15. FIG. 14 is a flowchart illustrating an example of the process of the information processing apparatus 10 during learning according to the third embodiment. FIG. 15 is a diagram illustrating an example of the history of user operations with respect to recommended operation settings stored in the operating conditions DB according to the second embodiment.

At step S1301, the transmission and reception part 15 of the information processing apparatus 10 records information on an operation setting to impart to the apparatus 20 in the user operation DB 112.

According to the example of FIG. 15, a tolerance (an example of "information indicating comfort") is recorded in the user operation DB 112, being correlated with various kinds of information used for the inference of an operation setting and the inferred operation setting with respect to each user ID.

The user ID is the ID of a user of the apparatus 20 or the ID of the apparatus 20. The various kinds of information used for the inference of an operation setting are various kinds of information used for the inference of the operation setting of the apparatus 20 with respect to the user ID. The various kinds of information used for the inference of an operation setting include information on a surrounding environment when the apparatus has been operated, power consumption, an operation setting, and the standard power consumption. The tolerance is described below. Through the process of step S1301, of a record of the user operation DB 112, items other than the tolerance are recorded.

Next, the transmission and reception part 15 of the information processing apparatus 10 imparts information that recommends the inferred operation setting to the user of the apparatus 20 (step S1302). This process may be the same as the process of step S1205 of FIG. 11.

### (Obtaining of Training Data)

Next, the obtaining part 11 of the information processing apparatus 10 obtains information on the operation of setting the apparatus 20 performed by the user of the apparatus 20 (step S1303). Here, the obtaining part 11 of the information processing apparatus 10 may, for example, obtain information on an operation on the remote controller of the apparatus 20 performed by the user, etc., from the apparatus 20. The obtaining part 11 of the information processing apparatus 10 may, for example, also obtain information on an operation for the apparatus 20 performed by the user on the terminal 30 from the terminal 30. The terminal 30 may transmit a control command (remote control command) to the apparatus 20 through radio communications using a wireless LAN or the like in response to the user's operation.

### (Learning of Tolerance)

Next, the training data creating part 133 of the information processing apparatus 10 calculates a tolerance indicating a degree to which the imparted (recommended, proposed) operation setting has been tolerated by the user of the apparatus 20, based on the obtained setting operation (step S1304). Here, the training data creating part 133 of the information processing apparatus 10 may, for example, calculate a tolerance for the recommended operation setting under predetermined conditions in response to the user's operation with respect to the operation setting imparted to the user.

In this case, for example, when the user performs an operation to change the operation setting of the apparatus 20 within a predetermined period of time (for example, one hour) after the recommendation of the operation setting of the apparatus 20 under predetermined conditions to the user, the training data creating part 133 of the information processing apparatus 10 may determine a tolerance value such that the tolerance value increases as the degree to which the change complies with the recommendation (the degree of compliance) increases.

In this case, for example, when an operation to cause the operation setting of the apparatus 20 to be identical to the recommended operation setting is performed within a predetermined period of time after the recommendation of the operation setting of the apparatus 20 under predetermined conditions to the user, the training data creating part 133 of the information processing apparatus 10 may set the tolerance to "10" (an example of "first value").

Furthermore, for example, when an operation to cause the operation setting of the apparatus 20 to comply with the recommended operation setting to a certain extent is performed within the predetermined period of time, the training data creating part 133 of the information processing apparatus 10 may set the tolerance to a value according to the degree of compliance.

For example, it is assumed that in a situation where cooling operation is being performed with the outside air temperature being 30 °C and the set temperature of the apparatus 20 being 25 °C, a set temperature of 28 °C is recommended to a user. In this case, the training data creating part 133 of the information processing apparatus 10 may set the tolerance to, for example, "7" or the like when the set temperature is changed to 27 °C and to, for example, "4" or the like when the set temperature is changed to 26 °C. Furthermore, in this case, when the set temperature is changed to 24°C, the training data creating part 133 of the information processing apparatus 10 may determine that the degree of compliance is negative and set the tolerance to, for example, "-5" (an example of "third value") or the like because a setting change operation contrary to the recommendation has been performed by the user.

Furthermore, for example, when no operation to change the operation setting of the apparatus 20 is performed within the predetermined period of time, the training data creating part 133 of the information processing apparatus 10 may set the tolerance to, for example, "0" (an example of "second value") or the like.

Furthermore, for example, when an operation to reject the recommended operation setting is performed within the predetermined period of time, the training data creating part 133 of the information processing apparatus 10 may set the tolerance to, for example, to "-1" (an example of "fourth value") or the like.

Furthermore, the training data creating part 133 of the information processing apparatus 10 may, for example, further adjust the value of a tolerance based on the type of the terminal 30 to which the recommended operation setting is imparted. In this case, information on the type of the terminal 30 may be pre-registered with the training data creating part 133 of the information processing apparatus 10 by the user. The training data creating part 133 of the information processing apparatus 10 may multiply the value of the above-described tolerance by a first coefficient (for example, "1") when the terminal 30 is, for example, a smartphone and multiply the value of the above-described tolerance by a second coefficient (for example, "0.5") when the terminal 30 is, for example, the remote controller of the apparatus 20. This, for example, in the case where the terminal 30 is a remote controller shared by multiple users in an office or the like, makes it possible to reduce the degree of reflection on the tolerance even when an operation that ignores the recommendation or the like is performed.

Furthermore, the training data creating part 133 of the information processing apparatus 10 may, for example, create information indicating comfort based on an operation input to the apparatus 20 by the user when the apparatus 20 has been operated with a second operation setting different from a first operation setting last set by the user. In this case, for example, when the next setting change operation has not been performed by the user within a predetermined period of time since the user performs a setting change operation, the apparatus 20 may switch to the second operation setting that consumes less power than the current first operation setting. When no setting change operation has been performed by the user for a predetermined period of time or more after the switch to the second operation setting, the training data creating part 133 of the information processing apparatus 10 may set a high value as a tolerance for the second operation setting.

Next, the training data creating part 133 of the information processing apparatus 10 records the tolerance for the recommended operation setting in the user operation DB 112 (step S1305). Here, the training data creating part 133 of the information processing apparatus 10 records in the item of tolerance in the record recorded in the user operation DB 112 in the process of step S1301.

Next, the training data creating part 133 of the information processing apparatus 10 creates training data for learning a user tolerance according to a surrounding environment when the apparatus 20 is operated and an operation setting, based on a data set recorded in the user operation DB 112 (step S1306).

Here, the training data creating part 133 of the information processing apparatus 10 may, for example, employ, as training data for learning a tolerance, a data set including information on at least one item (third item) included in the information indicating a surrounding environment when the apparatus 20 has been operated, the power consumption, the operation setting, the recommended operation setting, and the tolerance recorded in the user operation DB 112. The above-described first item, second item, and third item may be either the same or different.

In this case, the training data creating part 133 of the information processing apparatus 10 may, for example, use the information on at least one item included in the information indicating a surrounding environment when the apparatus 20 has been operated, the current power consumption of the apparatus 20, the current operation setting of the apparatus 20, the current standard power consumption of the apparatus 20, and the recommended operation setting as an input and use the tolerance as ground truth data, and employ a combination (set) of the input and the ground truth data as training data for learning a tolerance.

Next, the learning part 134 of the information processing apparatus 10 learns a tolerance indicating the degree to which the operation setting is tolerated by the user A according to the surrounding environment of the apparatus 20, etc., and the recommended operation setting, based on the created training data (step S1307).

Here, the learning part 134 of the information processing apparatus 10 may, for example, learn, by machine learning, a regression problem to infer a tolerance based on an input with supervised learning. This makes it possible to learn a tolerance according to the surrounding environment of the apparatus 20, etc., and the recommended operation setting.

In this case, the learning part 134 of the information processing apparatus 10 may, for example, perform machine learning using linear regression (linear regression). In this case, the learning part 134 of the information processing apparatus 10 may, for example, perform machine learning using the method of least squares or the like, using the tolerance as an objective variable and using information on at least one item included in the information indicating a surrounding environment when the apparatus 20 has been operated, the recommended operation setting, etc., as explanatory variables.

Furthermore, the learning part 134 of the information processing apparatus 10 may, for example, perform machine learning using nonlinear regression (nonlinear regression). In this case, the learning part 134 of the information processing apparatus 10 may perform machine learning using, for example, a regression (recurrent) neural network (Recurrent neural network, RNN), a general regression neural network (General Regression Neural Network), a random forest (Random Forest), a support vector machine (support vector machine, SVM) or the like.

### <<Process During Inference>>

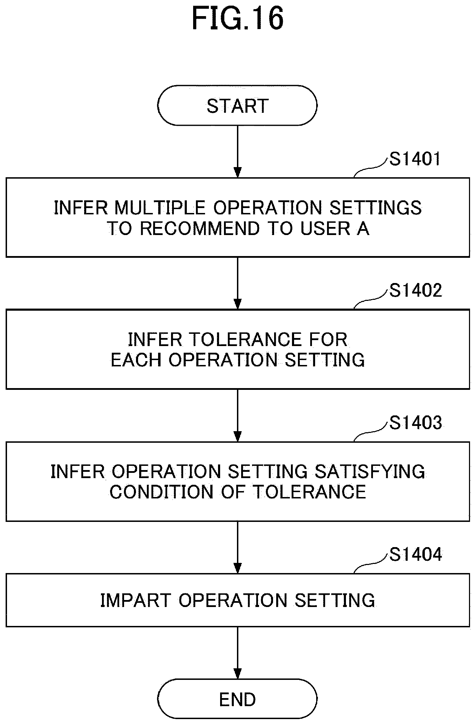

Next, an example of the process of the information processing apparatus 10 during inference according to the third embodiment is described with reference to FIG. 16. FIG. 16 is a flowchart illustrating an example of the process of the information processing apparatus 10 during inference according to the third embodiment. In the following, an example where inference is performed with respect to the apparatus 20A is described.

At step S1401, the inference part 142 of the information processing apparatus 10 infers multiple operation settings for the user A of the apparatus 20A. Here, the inference part 142 of the information processing apparatus 10 may, for example, infer operation settings by executing the same process as in steps S1201 through S1204 of FIG. 11 of the above-described first embodiment. In this case, the inference part 142 of the information processing apparatus 10 may, for example, calculate a predetermined number of operation settings in descending order of the certainty (accuracy) of inference.

Next, the inference part 142 of the information processing apparatus 10 infers a tolerance for each of the operation settings inferred at step S1401, based on the inferred operation settings, information indicating the current surrounding environment of the apparatus 20A, etc., and the result of learning a tolerance by the process of step S1304 of FIG. 13 (step S1402).

Next, the inference part 142 of the information processing apparatus 10 infers an operation setting that satisfies the condition of tolerance in the environment, in accordance with each of the inferred operation settings and the tolerance inferred with respect to each operation setting (step S1403). Here, the inference part 142 of the information processing apparatus 10 may, for example, select the operation setting of the highest tolerance as an operation setting to recommend to the user A.

Alternatively, the inference part 142 of the information processing apparatus 10 may, for example, select the operation setting for which the total value of a value obtained by normalizing accuracy with respect to each operation setting and a value obtained by normalizing a tolerance for each operation setting is highest as an operation setting to recommend to the user A.

The inference part 142 of the information processing apparatus 10 may use the tolerance as a reward and infer an operation setting that maximizes the reward by machine learning.

Next, the transmission and reception part 15 of the information processing apparatus 10 imparts information recommending an operation setting that satisfies the condition of tolerance in the environment to the user A of the apparatus 20A (step S1404).

### <Variation of Inference of Operation Setting According to Tolerance>

The information processing apparatus 10 may recommend an operation setting according to the tolerance of each user of the apparatus 20. In this case, the training data creating part 133 of the information processing apparatus 10 may, for example, at step S1306 of FIG. 14, also use the user ID of a user present around during the operation of the apparatus 20 as an input and use the tolerance as ground truth data, and employ, as training data for learning a tolerance, a combination (set) of the input and the ground truth data. Then, the learning part 134 of the information processing apparatus 10 may learn the tolerance of each user based on the training data at step S1307 of FIG. 14. Then, the inference part 142 of the information processing apparatus 10 may infer a tolerance according to the user of the apparatus 20A at step S1402 of FIG. 16.

The user ID of a user present around during the operation of the apparatus 20 may be, for example, obtained from the entry and exit management system of an office or pre-registered with the information processing apparatus 10 by the user.

Furthermore, the information processing apparatus 10 may also recommend an operation setting according to a tolerance with respect to each attribute of a user of the apparatus 20. Example of user attributes may include the gender, age, etc., of a user. Information on user attributes may be pre-registered with the information processing apparatus 10 by the user.

In this case, the training data creating part 133 of the information processing apparatus 10 may, for example, at step S1306 of FIG. 14, also use an attribute of a user present around during the operation of the apparatus 20 as an input and use the tolerance as ground truth data, and employ, as training data for learning a tolerance, a combination (set) of the input and the ground truth data. Then, the learning part 134 of the information processing apparatus 10 may learn a tolerance according to the user attribute based on the training data at step S1307 of FIG. 14. Then, the inference part 142 of the information processing apparatus 10 may infer a tolerance according to the user of the apparatus 20A at step S1402 of FIG. 16.

Embodiments are described above, while it will be understood that various changes in form and details are possible without departing from the scope of the claims.

The present invention is based upon and claims priority to basic application No. 2019-180995, filed with the Japan Patent Office on September 30, 2019 and basic application No. 2019-115764, filed with the Japan Patent Office on June 21, 2019.

### DESCRIPTION OF THE REFERENCE NUMERALS

1 air conditioning system
1000 information processing system
10 information processing apparatus
11 obtaining part
111 learning data set
111A operating conditions DB
112 user operation DB
13 learning part
131 training data creating part
132 learning part
133 training data creating part
134 learning part
14 inference part
141 inference part
142 inference part
15 transmission and reception part
20 air conditioner
30 terminal
40 controller

## Claims

1. An information processing method, **characterized in that**:
an information processing apparatus (10),
based on a data set including a combination of information indicating a situation, information on comfort of a user, and information on power consumption when an air conditioner (20) has been operated, performs reinforcement learning that uses, as a reward, a value determined based on a first index that increases as the comfort of a user increases and a second index that increases as the power consumption decreases, and
executes a process of determining an operation setting according to a situation when the air conditioner (20) is operated, the comfort of a user when the air conditioner (20) is operated, and a condition related to the power consumption when the air conditioner (20) is operated,
wherein
a first coefficient and a second coefficient are determined based on information specified by the user, and
a value, value determined based on a value obtained by multiplying a value of the first index by the first coefficient and on a value obtained by multiplying a value of the second index by the second coefficient, is used as the reward.

2. The information processing method as claimed in claim 1,
wherein
the reinforcement learning is performed with an action option of changing at least one of target temperature, target humidity, set airflow volume, and set airflow direction.

3. The information processing method as claimed in any of claims 1 to 2, wherein
the reinforcement learning is performed with an action option of changing at least one of condensation temperature, evaporation temperature, an opening degree of an expansion valve (204), a rotational speed of a compressor (201), a rotational speed of an indoor unit fan, and a rotational speed of an outdoor unit fan.

4. The information processing method as claimed in any of claims 1 to 3, wherein
the information indicating the situation includes at least one of indoor temperature, indoor humidity, an indoor air flow, indoor radiation temperature, an amount of clothing of the user, an amount of activity of the user, and information on the user.

5. The information processing method as claimed in any of claims 1 to 4, wherein
the information indicating the situation includes at least one of outdoor temperature, outdoor humidity, solar irradiance, and a number of people inside a room.

6. The information processing method as claimed in any of claims 1 to 5, wherein
the information indicating the situation includes at least one of indoor lighting, an indoor scent, an indoor sound, and indoor air cleanliness.

7. The information processing method as claimed in any of claims 1 to 6, wherein
the information indicating the situation includes at least one of condensation temperature, evaporation temperature, an opening degree of an expansion valve (204), a rotational speed of a compressor (201), a rotational speed of an indoor unit fan, and a rotational speed of an outdoor unit fan.

8. The information processing method as claimed in any of claims 1 to 7, wherein
the information on the comfort of a user includes at least one of a value of an index indicating indoor comfort and information indicating comfort input by the user.

9. The information processing method as claimed in any of claims 1 to 8, wherein
the information on the comfort of a user includes a tolerance indicating a degree to which the operation setting according to the situation is tolerated by the user.

10. The information processing method as claimed in claim 9,
wherein
the information indicating the situation includes at least one of a date and time, a weather type, a heat load, an indoor floor area, an indoor use type, and a type of the air conditioner when the air conditioner has been operated.

11. The information processing method as claimed in claim 9 or 10,
wherein
the information indicating the situation, an operation setting of the air conditioner (20) proposed to the user according to the situation, and information on an operation of changing the operation setting of the air conditioner (20) performed by the user are obtained, and
the tolerance is set to a first value when the user performs a setting change operation according to the proposal within a predetermined period of time since the operation setting of the air conditioner (20) is proposed to the user, and the tolerance is set to a second value lower than the first value when the user does not perform the setting change operation according to the proposal within the predetermined period of time.

12. The information processing method as claimed in any of claims 9 to 11, wherein
a value of the tolerance when a setting change operation has been performed by the user or a value of the tolerance when a setting change operation has not been performed by the user is adjusted based on a type of a terminal through which a proposed operation setting of the air conditioner is imparted to the user.

13. The information processing method as claimed in any of claims 1 to 8, wherein
the information on the power consumption includes at least one of a power consumption amount integrated value, a power consumption peak value, a current value, a high-pressure pressure, a low-pressure pressure, a compressor rotational speed, and information indicating compressor operating efficiency.

14. An information processing apparatus (10) **characterized by**:
a processor configured to execute the information processing method as claimed in any of claims 1-13.

## Patentansprüche

1. Informationsverarbeitungsverfahren, **dadurch gekennzeichnet, dass**:
eine Informationsverarbeitungsvorrichtung (10),
auf der Grundlage eines Datensatzes, der eine Kombination von Information, die eine Situation anzeigt, Information über den Komfort eines Benutzers und Information über den Energieverbrauch, wenn eine Klimaanlage (20) betrieben wurde, enthält, ein Verstärkungslernen durchführt, das als Belohnung einen Wert verwendet, der auf der Grundlage eines ersten Indexes, der sich erhöht, wenn sich der Komfort eines Benutzers erhöht, und eines zweiten Indexes, der sich erhöht, wenn sich der Energieverbrauch verringert, bestimmt wird, und
einen Prozess des Bestimmens einer Betriebseinstellung gemäß einer Situation, wenn die Klimaanlage (20) betrieben wird, dem Komfort eines Benutzers, wenn die Klimaanlage (20) betrieben wird, und einer Bedingung, die sich auf den Stromverbrauch bezieht, wenn die Klimaanlage (20) betrieben wird, ausführt,
wobei
ein erster Koeffizient und ein zweiter Koeffizient auf der Grundlage von durch den Benutzer spezifizierter Information bestimmt werden, und
ein Wert, der auf der Grundlage eines Wertes, der durch Multiplizieren eines Wertes des ersten Indexes mit dem ersten Koeffizienten erhalten wird, und eines Wertes, der durch Multiplizieren eines Wertes des zweiten Indexes mit dem zweiten Koeffizienten erhalten wird, bestimmt wird, als die Belohnung verwendet wird.

2. Informationsverarbeitungsverfahren nach Anspruch 1, wobei
das Verstärkungslernen mit einer Aktionsoption durchgeführt wird, die mindestens eine der folgenden ändert: Zieltemperatur, Zielfeuchtigkeit, eingestellte Luftstrommenge und eingestellte Luftstromrichtung.

3. Informationsverarbeitungsverfahren nach einem der Ansprüche 1 bis 2, wobei
das Verstärkungslernen mit einer Aktionsoption durchgeführt wird, die mindestens eine(n) der folgenden ändert: Kondensationstemperatur, Verdampfungstemperatur, Öffnungsgrad eines Expansionsventils (204), Drehzahl eines Verdichters (201), Drehzahl eines Ventilators einer Inneneinheit und Drehzahl eines Ventilators einer Außeneinheit.

4. Informationsverarbeitungsverfahren nach einem der Ansprüche 1 bis 3, wobei die Information, die die Situation anzeigt, mindestens eine(n) von folgendem umfasst: Innentemperatur, Innenraumfeuchtigkeit, Innenraumluftstrom, Innenraumstrahlungstemperatur, Menge der Kleidung des Benutzers, Menge der Aktivität des Benutzers und Informationen über den Benutzer.

5. Informationsverarbeitungsverfahren nach einem der Ansprüche 1 bis 4, wobei
die Information, die die Situation anzeigt, mindestens eine von folgendem enthält: Außentemperatur, Außenfeuchtigkeit, Sonneneinstrahlung und Anzahl der Personen in einem Raum.

6. Informationsverarbeitungsverfahren nach einem der Ansprüche 1 bis 5, wobei
die Information, die die Situation anzeigt, mindestens eine(n) von folgendem enthält: Innenraumbeleuchtung, Innenraumgeruch, Innenraumgeräusch und Innenraumluftreinheit.

7. Informationsverarbeitungsverfahren nach einem der Ansprüche 1 bis 6, wobei
die Information, die die Situation anzeigt, mindestens eine(n) von folgendem enthält: Kondensationstemperatur, Verdampfungstemperatur, Öffnungsgrad eines Expansionsventils (204), eine Drehzahl eines Verdichters (201), eine Drehzahl eines Ventilators einer Inneneinheit und eine Drehzahl eines Ventilators einer Außeneinheit.

8. Informationsverarbeitungsverfahren nach einem der Ansprüche 1 bis 7, wobei
die Information über den Komfort eines Benutzers mindestens einen Wert eines Indexes, der den Innenraumkomfort anzeigt, und Information, die den vom Benutzer eingegebenen Komfort anzeigt, umfasst.

9. Informationsverarbeitungsverfahren nach einem der Ansprüche 1 bis 8, wobei
die Information über den Komfort eines Benutzers eine Toleranz enthält, die einen Grad angibt, bis zu dem die Betriebseinstellung gemäß der Situation vom Benutzer toleriert wird.

10. Informationsverarbeitungsverfahren nach Anspruch 9, wobei
die Information, die die Situation anzeigt, mindestens eine(s) von einem Datum und einer Uhrzeit, einem Wettertyp, einer Wärmelast, einer Innenraumbodenfläche, einem Innenraumnutzungstyp und einem Typ der Klimaanlage, wenn die Klimaanlage betrieben worden ist, enthält.

11. Informationsverarbeitungsverfahren nach Anspruch 9 oder 10, wobei
die Information, die die Situation anzeigt, eine Betriebseinstellung der Klimaanlage (20), die dem Benutzer entsprechend der Situation vorgeschlagen wird, und Information über einen Vorgang zum Ändern der Betriebseinstellung der Klimaanlage (20), der von dem Benutzer durchgeführt wird, erhalten werden, und
die Toleranz auf einen ersten Wert gesetzt wird, wenn der Benutzer einen Einstellungsänderungsvorgang gemäß dem Vorschlag innerhalb einer vorbestimmten Zeitspanne durchführt, seit die Betriebseinstellung der Klimaanlage (20) dem Benutzer vorgeschlagen wurde, und die Toleranz auf einen zweiten Wert gesetzt wird, der niedriger als der erste Wert ist, wenn der Benutzer den Einstellungsänderungsvorgang gemäß dem Vorschlag nicht innerhalb der vorbestimmten Zeitspanne durchführt.

12. Informationsverarbeitungsverfahren nach einem der Ansprüche 9 bis 11, wobei
ein Wert der Toleranz, wenn ein Einstellungsänderungsvorgang von dem Benutzer durchgeführt wurde, oder ein Wert der Toleranz, wenn ein Einstellungsänderungsvorgang von dem Benutzer nicht durchgeführt wurde, auf der Grundlage eines Typs eines Endgeräts angepasst wird, über das eine vorgeschlagene Betriebseinstellung der Klimaanlage dem Benutzer mitgeteilt wird.

13. Informationsverarbeitungsverfahren nach einem der Ansprüche 1 bis 8, wobei
die Information über den Stromverbrauch mindestens eine(n) von einem integrierten Wert des Stromverbrauchsbetrags, einem Spitzenwert des Stromverbrauchs, einem Stromwert, einem Hochdruck, einem Niederdruck, eine Verdichterdrehzahl und Information, die die Betriebseffizienz des Verdichters angibt, umfasst.

14. Informationsverarbeitungsvorrichtung (10), **gekennzeichnet durch**:
einen Prozessor, der so konfiguriert ist, dass er das Informationsverarbeitungsverfahren nach einem der Ansprüche 1-13 ausführt.

## Revendications

1. Procédé de traitement de l'information, **caractérisé en ce que** :
un appareil de traitement de l'information (10),
sur la base d'un jeu de données comprenant une combinaison d'informations indiquant une situation, d'informations sur le confort d'un utilisateur, et d'informations sur la consommation d'énergie lorsqu'un climatiseur (20) a été actionné, effectue un apprentissage par renforcement utilisant, comme récompense, une valeur déterminée en fonction d'un premier index augmentant au fur et à mesure de l'augmentation du confort d'un utilisateur, et d'un deuxième index augmentant au fur et à mesure de la diminution de la consommation d'énergie, et
assure l'exécution d'un processus de détermination d'un paramètre d'utilisation en fonction d'une situation lors de l'actionnement du climatiseur (20), du confort d'un utilisateur lorsque le climatiseur (20) est actionné, et d'un état relatif à la consommation d'énergie lorsque le climatiseur (20) est actionné,
un premier coefficient et un deuxième coefficient étant déterminés en fonction d'informations spécifiées par l'utilisateur, et
une valeur, déterminée en fonction d'une valeur obtenue en multipliant une valeur du premier index par le premier coefficient et d'une valeur obtenue en multipliant une valeur du deuxième index par le deuxième coefficient, étant utilisée comme récompense.

2. Procédé de traitement de l'information selon la revendication 1,
l'apprentissage par renforcement étant effectué avec une option d'action de modification d'au moins un d'une température cible, d'une humidité cible, d'un volume de débit d'air défini, et d'une direction de débit d'air définie.

3. Procédé de traitement de l'information selon une quelconque des revendications 1 à 2,
l'apprentissage par renforcement étant effectué avec une option d'action de modification d'au moins un d'une température de condensation, d'une température d'évaporation, d'un degré d'ouverture d'une valve d'expansion (204), d'une vitesse de rotation d'un compresseur (201), d'une vitesse de rotation d'un ventilateur d'unité intérieure, et d'une vitesse de rotation d'un ventilateur d'unité extérieure.

4. Procédé de traitement de l'information selon une quelconque des revendications 1 à 3,
les informations indiquant la situation comprenant au moins un d'une température d'intérieur, d'une humidité d'intérieur, d'un débit d'air intérieur, d'une température de rayonnement intérieur, d'une quantité de vêtements de l'utilisateur, d'un niveau d'activité de l'utilisateur, et d'informations sur l'utilisateur.

5. Procédé de traitement de l'information selon une quelconque des revendications 1 à 4,
les informations indiquant la situation comprenant au moins un d'une température d'extérieur, d'une humidité d'extérieur, du rayonnement solaire, et d'un nombre de personnes dans une pièce.

6. Procédé de traitement de l'information selon une quelconque des revendications 1 à 5,
les informations indiquant la situation comprenant au moins un d'un éclairage d'intérieur, d'un parfum d'intérieur, d'un son d'intérieur, et de la propreté de l'air d'intérieur.

7. Procédé de traitement de l'information selon une quelconque des revendications 1 à 6,
les informations indiquant la situation comprenant au moins un d'une température de condensation, d'une température d'évaporation, d'un degré d'ouverture d'une valve d'expansion (204), d'une vitesse de rotation d'un compresseur (201), d'une vitesse de rotation d'un ventilateur d'unité intérieure, et d'une vitesse de rotation d'un ventilateur d'unité extérieure.

8. Procédé de traitement de l'information selon une quelconque des revendications 1 à 7,
les informations sur le confort d'un utilisateur comprenant au moins une d'une valeur d'un index indiquant le confort d'intérieur et d'informations indiquant le confort entrées par l'utilisateur.

9. Procédé de traitement de l'information selon une quelconque des revendications 1 à 8,
les informations sur le confort d'un utilisateur comprenant une tolérance indiquant un degré auquel le paramètre d'utilisation en fonction de la situation est toléré par l'utilisateur.

10. Procédé de traitement de l'information selon la revendication 9,
les informations indiquant la situation comprenant au moins un d'une date et d'une heure, d'un type de temps, d'une charge thermique, d'une superficie intérieure, d'un type d'utilisation de l'intérieur, et d'un type de climatiseur lorsque le climatiseur a été actionné.

11. Procédé de traitement de l'information selon la revendication 9 ou 10,
dans lequel sont obtenues les informations indiquant la situation, un paramètre d'utilisation du climatiseur (20) proposé à l'utilisateur en fonction de la situation, et des informations sur une opération de modification du paramètre d'utilisation du climatiseur (20) effectuée par l'utilisateur, et
la tolérance étant réglée sur une première valeur lorsque l'utilisateur effectue, dans un délai prédéterminé, une opération de modification du paramètre conformément à la proposition depuis la proposition à l'utilisateur du paramètre d'utilisation du climatiseur (20), et la tolérance étant réglée sur une deuxième valeur, inférieure à la première valeur, lorsque l'utilisateur ne procède pas, dans le délai prédéterminé, à l'opération de modification du paramètre conformément à la proposition.

12. Procédé de traitement de l'information selon une quelconque des revendications 9 à 11,
une valeur de la tolérance lorsqu'une opération de modification du paramètre a été effectuée par l'utilisateur ou une valeur de la tolérance lorsqu'une opération de modification du paramètre n'a pas été effectuée par l'utilisateur étant ajustée en fonction d'un type de terminal par lequel un paramètre d'utilisation proposé du climatiseur est transmis à l'utilisateur.

13. Procédé de traitement de l'information selon une quelconque des revendications 1 à 8,
les informations sur la consommation d'énergie comprenant au moins une d'une valeur intégrée d'une quantité de consommation d'énergie, d'une valeur de pointe de consommation d'énergie, d'une valeur actuelle, d'une pression de haute pression, d'une pression de basse pression, d'une vitesse de rotation du compresseur, et d'informations indiquant le rendement opérationnel du compresseur.

14. Appareil de traitement de l'information (10) **caractérisé par** :
un processeur configuré pour effectuer le procédé de traitement de l'information selon une quelconque des revendications 1 à 13.
